# EUROPEAN PATENT APPLICATION

(11) **EP 4 072 093 A1**
(43) Date of publication of application: **12.10.2022**
(21) Application number: 20909188.3
(22) Date of filing: 31.12.2020
(51) Int. Cl.: H04L 29/06

(54) **COMMUNICATION METHOD AND APPARATUS**

(30) Priority: 31.12.2019 CN 201911418332
(71) Applicant: Huawei Technologies Co., Ltd., Shenzhen, Guangdong 518129, (CN)
(72) Inventor: LIN, Lin, Shenzhen, Guangdong 518129 (CN); ZHANG, Bo, Shenzhen, Guangdong 518129 (CN); DIAO, Wenbo, Shenzhen, Guangdong 518129 (CN)
(74) Representative: Pfenning, Meinig & Partner mbB
(86) International application number: PCT/CN2020/142192
(87) International publication number: WO 2021/136511

(57) **Abstract**

This application discloses a communication method and apparatus, to improve trustability of two communication parties and improve communication security. In this application, before sending a communication message or communication content to a peer end, a terminal device first determines whether the terminal device is a trusted source; and when determining that the terminal device is the trusted source, the terminal device sends the communication message to the peer end, and includes, in the communication message, a trust parameter used to indicate that the terminal device is the trusted source. That the terminal device is the trusted source may include that the terminal device is a trusted device and/or a user of the terminal device is a trusted user. Further, the peer end can determine, based on the trust parameter, whether the received communication message or communication content is trusted, and may notify a user if the received communication message or communication content is untrusted, thereby improving communication security.

## Description

### CROSS-REFERENCE TO RELATED APPLICATIONS

This application claims priority to Chinese Patent Application No. 201911418332.0, filed with the China National Intellectual Property Administration on December 31, 2019 and entitled "COMMUNICATION METHOD AND APPARATUS", which is incorporated herein by reference in its entirety.

### TECHNICAL FIELD

Embodiments of this application relate to the field of communications technologies, and in particular, to a communication method and apparatus.

### BACKGROUND

AI-based technologies such as facial beautification, face swapping, and voice change are developing rapidly, and have more realistic effects. Such technologies are likely to be used for illegal purposes such as fraud. For example, when a terminal device sends communication content to another terminal device, the communication content may be processed by malicious software such as face change/voice change software installed on the terminal. For another example, after a terminal device receives communication content, before being presented on a screen, the communication content may be processed through face change and voice change by using malicious implanted software. Because the communication content is processed through illegal means such as the malicious software, trustability of both communication parties is reduced, and communication security cannot be ensured.

### SUMMARY

Embodiments of this application provide a communication method and apparatus, to resolve a problem that communication security cannot be ensured due to low trustability of communication between terminal devices.

According to a first aspect, an embodiment of this application provides a communication method. The method may be performed by a first terminal device, or may be performed by a component (for example, a processor, a chip, or a chip system) of the first terminal device. The following is described by using an example in which an execution body is the first terminal device. After determining that the first terminal device is a trusted source, the first terminal device sends a communication message to a second terminal device, and includes a trust parameter of the first terminal device in the communication message. The trust parameter of the first terminal device is used to indicate that the first terminal device is the trusted source. That the first terminal device is the trusted source may include that the first terminal device is a trusted device and/or that a user of the first terminal device is a trusted user. For example, the communication message may be a communication request message, a communication response message, or a message used to send communication content.

For example, when the first terminal device determines that the first terminal device is the trusted device, the trust parameter of the first terminal device may include a first parameter used to represent that the first terminal device is the trusted device. For another example, when the first terminal device determines that the user of the first terminal device is the trusted user, the trust parameter of the first terminal device may include a second parameter used to represent that the user of the first terminal device is the trusted user. For another example, when the first terminal device determines that the first terminal device is the trusted device and determines that the user of the first terminal device is the trusted user, the trust parameter of the first terminal device may include a first parameter used to represent that the first terminal device is the trusted device and a second parameter used to represent that the user of the first terminal device is the trusted user.

In the foregoing solution, when determining that the local terminal device is the trusted source, the local terminal device sends the parameter representing that the local terminal device is the trusted source to the peer terminal device, so that a trusted communication connection is established between the two terminal devices, or trusted data is transmitted between the two terminal devices, thereby improving communication trustability between the terminal devices and ensuring communication security.

In a possible design, the first parameter may include a trusted device digital certificate and/or a trusted device signature of the first terminal device, the second parameter may include a user public digital certificate of the first terminal device and/or a trusted user signature of the first terminal device, and the user public digital certificate of the first terminal device includes user identity credential public information of the first terminal device.

In the foregoing design, the trusted device digital certificate and the trusted device signature are included in the communication message to indicate that the terminal device is the trusted device. This manner is simple and effective.

In a possible design, the trusted device signature is obtained after one or more of the following are signed by using a first secret key (for example, K3) burnt in the first terminal device: a message digest of the communication message, firmware information of the first terminal device, the user identity credential public information of the first terminal device, or a signature timestamp.

In a possible design, the trusted user signature of the first terminal device is obtained after one or more of the following are signed by using a user signature secret key (for example, K7): a message digest of the communication message, firmware information of the first terminal device, the user identity credential public information of the first terminal device, or a signature timestamp.

In a possible design, if that the first terminal device is the trusted source includes that the user of the first terminal device is the trusted user, that the user of the first terminal device is the trusted user may be determined in the following manner: The first terminal device verifies a user private digital certificate of the first terminal device, where the user private digital certificate includes user identity credential privacy information of the first terminal device. Then, when successfully verifying the user private digital certificate and determining that identity credential verification information included in the user identity credential privacy information of the first terminal device matches collected user verification information, the first terminal device determines that the user of the first terminal device is the trusted user.

In the foregoing design, whether the user is trusted is determined through verification on the user private digital certificate and verification on the verification information in the user private digital certificate, thereby improving security.

In a possible design, if that the first terminal device is the trusted source includes that the first terminal device is the trusted device, that the first terminal device is the trusted device may be determined in the following manner: The first terminal device determines that a trusted chain of the first terminal device is not cracked.

In a possible design, that the trusted chain of the first terminal device is not cracked may be determined by using at least one of the following: A root is not attacked, a chip is not physically attacked, an operating system is not tampered with, basic software is not tampered with, collected content is not processed by uncontrollable software, or the like.

According to a second aspect, an embodiment of this application provides another communication method. The method may be performed by a second terminal device, or may be performed by a component (for example, a processor, a chip, or a chip system) of the second terminal device. The following is described by using an example in which an execution body is the second terminal device. Specifically, the method includes: The second terminal device receives a communication message from a first terminal device, where the communication message carries a trust parameter of the first terminal device. Then, the second terminal device verifies, based on the trust parameter of the first terminal device, whether the first terminal device is a trusted source. The trust parameter of the first terminal device is used to indicate whether the first terminal device is a trusted source. That the first terminal device is the trusted source includes that the first terminal device is a trusted device and/or that a user of the first terminal device is a trusted user.

In the foregoing solution, the peer terminal device sends the parameter representing that the peer terminal device is the trusted source to the local terminal device. The local terminal device can verify, based on the trust parameter of the peer terminal device, whether the peer terminal device is the trusted source, so that a trusted communication connection is established between the two terminal devices, or trusted data is transmitted between the two terminal devices, thereby improving communication trustability between the terminal devices and ensuring communication security.

In a possible design, when verifying that the first terminal device is an untrusted source, the second terminal device may notify a user. For example, the user is notified that the first terminal device is the untrusted source.

In a possible design, the trust parameter of the first terminal device includes a first parameter used to determine that the first terminal device is the trusted device; and that the second terminal device verifies, based on the trust parameter of the first terminal device, whether the first terminal device is the trusted device may be implemented in the following manners:
when the first parameter includes a trusted device digital certificate of the first terminal device, the second terminal device verifies the trusted device digital certificate of the first terminal device, and when verification succeeds, determines that the first terminal device is the trusted device; or
when the first parameter includes a trusted device digital certificate of the first terminal device and a trusted device signature of the first terminal device, the second terminal device verifies the trusted device digital certificate of the first terminal device; if verification succeeds, verifies the trusted device signature of the first terminal device; and when verifying that the trusted device signature of the first terminal device is not tampered with, determines that the first terminal device is the trusted device; or
when the first parameter includes a trusted device signature of the first terminal device, the second terminal device determines, when verifying that the trusted device signature of the first terminal device is not tampered with, that the first terminal device is the trusted device.

In a possible design, the trust parameter of the first terminal device includes a first parameter used to verify that the first terminal device is the trusted device; and that the second terminal device verifies, based on the trust parameter of the first terminal device, whether the first terminal device is the trusted device may be implemented in the following manners:
when the first parameter includes a trusted device digital certificate of the first terminal device, and the trusted device digital certificate of the first terminal device is valid, the second terminal device verifies the trusted device digital certificate of the first terminal device, and when verification succeeds, determines that the first terminal device is the trusted device; or
when the first parameter includes a trusted device digital certificate of the first terminal device and a trusted device signature of the first terminal device, the second terminal device determines that the trusted device digital certificate of the first terminal device is valid, and verifies the trusted device digital certificate of the first terminal device; when verification succeeds, verifies the trusted device signature of the first terminal device when verifying that hardware information of the first terminal device included in the trusted device digital certificate of the first terminal device is valid; and when verifying that the trusted device signature of the first terminal device is not tampered with, determines that the first terminal device is the trusted device.

In the foregoing design, whether the trusted device digital certificate is invalid needs to be verified, thereby improving reliability.

In a possible design, the trusted device signature of the first terminal device is related to a first secret key burnt in the first terminal device; and when it is verified that the trusted device signature of the first terminal device is not tampered with, the method may include: The trusted device signature of the first terminal device is verified by using a second secret key, and when verification succeeds, that the trusted device signature of the first terminal device is not tampered with is determined, where the first secret key and the second secret key are a key pair.

In a possible design, the trusted device signature of the first terminal device is obtained after one or more of the following are signed by using the first secret key: a message digest of the communication message, firmware information of the first terminal device, user public identity information of the first terminal device, or a signature timestamp.

In a possible design, the trust parameter of the first terminal device includes a second parameter used to verify that the user of the first terminal device is the trusted user; and that the second terminal device verifies, based on the trust parameter of the first terminal device, whether the user of the first terminal device is the trusted user may be implemented in the following manners:
when the second parameter includes a user public digital certificate of the first terminal device, the second terminal device verifies the user public digital certificate of the first terminal device, and when verification succeeds, determines that the user of the first terminal device is the trusted user; or
when the second parameter includes a user public digital certificate of the first terminal device and a trusted user signature of the first terminal device, the second terminal device verifies the user public digital certificate of the first terminal device; when verification succeeds, verifies the trusted user signature of the first terminal device; and when verifying that the trusted user signature of the first terminal device is not tampered with, determines that the user of the first terminal device is the trusted user, where
the user public digital certificate of the first terminal device includes user identity credential public information of the first terminal device.

In a possible design, the trust parameter of the first terminal device includes a second parameter used to represent that the user of the first terminal device is the trusted user; and that the second terminal device verifies, based on the trust parameter of the first terminal device, whether the user of the first terminal device is the trusted user may be implemented in the following manners:
when the second parameter includes a user public digital certificate of the first terminal device, and the user public digital certificate of the first terminal device is valid, the second terminal device verifies the user public digital certificate of the first terminal device, and when verification succeeds, determines that the user of the first terminal device is the trusted user; or
when the second parameter includes a user public digital certificate of the first terminal device and a trusted user signature of the first terminal device, the second terminal device determines that the user public digital certificate of the first terminal device is valid, and verifies the user public digital certificate of the first terminal device; when verification succeeds, verifies the trusted user signature of the first terminal device when verifying that user identity credential public information of the first terminal device included in the user public digital certificate of the first terminal device is valid; and when verifying that the trusted user signature of the first terminal device is not tampered with, determines that the user of the first terminal device is the trusted user, where
the user public digital certificate of the first terminal device includes the user identity credential public information of the first terminal device.

In the foregoing design, the user public digital certificate or whether the trusted device digital certificate is invalid needs to be verified, thereby improving reliability.

In a possible design, the trusted user signature of the first terminal device is related to a user signature private key (for example, K7); and that the trusted user signature of the first terminal device is not tampered with may be verified in the following manner: The trusted user signature of the first terminal device is verified by using a user signature public key (for example, K8), and when verification succeeds, that the trusted user signature of the first terminal device is not tampered with is determined, where the user signature private key and the user signature public key are a key pair.

In a possible design, the trusted user signature of the first terminal device is obtained after one or more of the following are signed by using the user signature private key: a message digest of the communication message, firmware information of the first terminal device, the user identity credential public information of the first terminal device, or a signature timestamp.

In a possible design, after verifying that the first terminal device is the trusted source, the second terminal device sends communication content to the first terminal device, where the communication content may be carried in a first protocol packet, one second protocol packet carrying a trusted signature of the second terminal device is sent each time a preset quantity of first protocol packets that carry the communication content are sent, and the trusted signature of the second terminal device includes a trusted user signature of the second terminal device and/or a trusted device signature of the second terminal device.

The trusted signature of the second terminal device is related to a secret key burnt in the second terminal device. The trusted device signature of the second terminal device is obtained after one or more of the following are signed by using the secret key burnt in the second terminal device: a message digest of the second protocol packet at intervals of the preset quantity of first protocol packets, firmware information of the second terminal device, user public identity information of the second terminal device, or a signature timestamp.

The trusted user signature of the second terminal device is related to a secret key used to generate the user public digital certificate of the second terminal device. The trusted user signature of the first terminal device is obtained after one or more of the following are signed by using a secret key used to generate a user public digital certificate of the second terminal device: message digests of a preset quantity of first protocol packets at an interval before the second protocol packet, firmware information of the second terminal device, user public identity information of the second terminal device, or a signature timestamp. Further, when receiving the second protocol packet, the first terminal device may verify security of the communication content, and may notify the user when verifying, based on the trusted signature of the second terminal device, that the communication content is insecure. Therefore, the user determines, based on the notification, whether to open the communication content, thereby improving communication security.

In a possible design, the trusted signature of the second terminal device is carried in an extension packet header of the second protocol packet, and a payload area of the second protocol packet carries the communication content; or the trusted signature of the second terminal device is carried in a payload area of the second protocol packet.

According to a third aspect, an embodiment of this application provides still another communication method. The method may be performed by a second terminal device, or may be performed by a component (for example, a processor, a chip, or a chip system) of the second terminal device. The following is described by using an example in which an execution body is the second terminal device. Specifically, the method includes: The second terminal device receives a communication message from a first terminal device by using a trusted communication service platform to which the second terminal device belongs, where the communication message carries trusted endorsement signature information; and the second terminal device determines, based on the trusted endorsement signature information, whether the communication message is trusted. For example, the trusted endorsement signature information is added in the communication message when the trusted communication service platform verifies that the first terminal device is a trusted source.

In the foregoing solution, after verifying that the terminal device is the trusted source, the trusted communication service platform adds the trusted endorsement signature information, so that the terminal device can determine, based on the trusted endorsement signature information, that the peer terminal device is the trusted source, thereby reducing complexity of verification on the terminal device.

In a possible design, the trusted endorsement signature information is obtained after a trusted endorsement is signed by using a trusted endorsement private key of the trusted communication service platform to which the second terminal device belongs; and that the second terminal device determines, based on the trusted endorsement signature information, whether the communication message is trusted may be implemented in the following manner: The second terminal device verifies, by using a trusted endorsement public key, the trusted endorsement signature information, and when verification succeeds, and when determining that the trusted endorsement in the trusted endorsement signature information matches information included in the communication message, determines that the communication message is trusted, where the trusted endorsement public key and the trusted endorsement private key are a key pair.

In a possible design, the trusted endorsement includes one or more of the following: digest information of the communication message, firmware information of the first terminal device, user identity credential public information of the first terminal device, an identifier of the trusted communication service platform to which the second terminal device belongs, a signature timestamp, a public key (K2) used to verify a trusted device digital certificate of the first terminal device, or a public key (K6) used to verify a trusted user digital certificate of the first terminal device.

According to a fourth aspect, an embodiment of this application provides still another communication method. The method may be performed by a trusted communication service platform. Specifically, the method includes: A first trusted communication service platform receives a first communication message from a first terminal device, where the first communication message carries a trust parameter of the first terminal device, and the trust parameter of the first terminal device is used to determine whether the first terminal device is a trusted source, and that the first terminal device is the trusted source includes that the first terminal device is a trusted device and/or a user of the first terminal device is a trusted user; when determining, based on the trust parameter of the first terminal device, that the first terminal device is the trusted source, the first trusted communication service platform adds first trusted endorsement signature information of the first terminal device to the first communication message to obtain a second communication message; and the first trusted communication service platform sends the second communication message to a second terminal device.

For example, if both the first terminal device and the second terminal device belong to the first trusted communication service platform, the first trusted communication service platform may directly send the second communication message to the second terminal device. For another example, if the second terminal device belongs to a second trusted communication service platform, the first trusted communication service platform may send the second communication message to the second terminal device by using the second trusted communication service platform.

In the foregoing solution, after verifying that the terminal device is the trusted source, the trusted communication service platform adds the trusted endorsement, so that the terminal device can determine, based on the trusted endorsement, that the peer terminal device is the trusted source, thereby reducing complexity of verification on the terminal device.

For descriptions of the trust parameter of the first terminal device, refer to the first aspect or the second aspect. Details are not described herein again.

In a possible design, the first trusted endorsement signature information of the first terminal device is obtained after a first trusted endorsement is signed by using a trusted endorsement private key of the first trusted communication service platform, and the first trusted endorsement includes one or more of the following: digest information of the second communication message, firmware information of the first terminal device, user identity credential public information of the first terminal device, an identifier of the first trusted communication service platform, a signature timestamp, a public key (K2) used to verify a trusted device digital certificate of the first terminal device, or a public key (K6) used to verify a trusted user digital certificate of the first terminal device.

According to a fifth aspect, an embodiment of this application provides a communication method, including: A second trusted communication service platform receives a second communication message sent by a first trusted communication service platform, where the second communication message carries first trusted endorsement signature information, the first trusted endorsement signature information is added after the first trusted communication service platform verifies that a first terminal device is a trusted source, and the first terminal device belongs to the first trusted communication service platform; when determining, based on the first trusted endorsement signature information, that the second communication message is trusted, replacing, by the second trusted communication service platform, the first trusted endorsement signature information with second trusted endorsement signature information to obtain a third communication message, where the second trusted endorsement signature is used to verify whether the third communication message is trusted; and the second trusted communication service platform sends the third communication message to a second terminal device, where the second terminal device belongs to the second trusted communication service platform.

In a possible design, the first trusted endorsement signature information is obtained after a first trusted endorsement is signed by using a trusted endorsement private key of the first trusted communication service platform, and the first trusted endorsement includes one or more of the following: digest information of the second communication message, firmware information of the first terminal device, user identity credential public information of the first terminal device, an identifier of the first trusted communication service platform, a signature timestamp, a public key used to verify a trusted device digital certificate of the first terminal device, or a public key used to verify a trusted user digital certificate of the first terminal device.

In a possible design, the second trusted endorsement signature information is obtained after a second trusted endorsement is signed by using a trusted endorsement private key of the second trusted communication service platform, and the second trusted endorsement includes one or more of the following: digest information of the third communication message, firmware information of the first terminal device, user identity credential public information of the first terminal device, an identifier of the second trusted communication service platform, a signature timestamp, a public key used to verify a trusted device digital certificate of the first terminal device, or a public key used to verify a trusted user digital certificate of the first terminal device.

In a possible design, that the second trusted communication service platform determines, based on the first trusted endorsement signature information, that the second communication message is trusted includes: The second trusted communication service platform verifies the first trusted endorsement signature information by using a trusted endorsement public key of the first trusted service platform, and when verification succeeds, if determining, based on the first trusted endorsement in the first trusted endorsement signature information, that the second communication message is not tampered with, determines that the second communication message is trusted.

According to a sixth aspect, an embodiment of this application provides an apparatus that can implement the method in any one of the first aspect or the possible implementations of the first aspect, or implement the method in any one of the second aspect or the possible implementations of the second aspect, or implement the method in any one of the third aspect or the possible implementations of the third aspect. The apparatus includes a corresponding unit or component configured to perform the foregoing method. The unit included in the apparatus may be implemented by using software and/or hardware. The apparatus may be, for example, a terminal device, or a chip, a chip system, or a processor that can support the terminal device in implementing the foregoing method.

According to a seventh aspect, an embodiment of this application provides an apparatus that can implement the method in any one of the fourth aspect or the possible implementations of the fourth aspect, or implement the method in any one of the fifth aspect or the possible implementations of the fifth aspect. The apparatus includes a corresponding unit or component configured to perform the foregoing method. The unit included in the apparatus may be implemented by using software and/or hardware. The apparatus may be, for example, a trusted communication service platform, or a server, a chip, a chip system, or a processor that can support the trusted communication service platform in implementing the foregoing method.

According to an eighth aspect, an embodiment of this application provides an apparatus including a processor. The processor is coupled to a memory, and the memory is configured to store programs or instructions. When the programs or the instructions are executed by the processor, the apparatus is enabled to implement the method in any one of the first aspect or the possible implementations of the first aspect, or the apparatus is enabled to implement the method in any one of the second aspect or the possible implementations of the second aspect; or the apparatus is enabled to implement the method in any one of the third aspect or the possible implementations of the third aspect.

According to a ninth aspect, an embodiment of this application provides an apparatus including a processor. The processor is coupled to a memory, and the memory is configured to store programs or instructions. When the programs or the instructions are executed by the processor, the apparatus is enabled to implement the method in any one of the fourth aspect or the possible implementations of the fourth aspect; or the apparatus is enabled to implement the method in any one of the fifth aspect or the possible implementations of the fifth aspect.

According to a tenth aspect, an embodiment of this application provides a computer-readable medium storing computer programs or instructions. When the computer programs or instructions are executed, a computer is enabled to perform the method in any one of the first aspect or the possible implementations of the first aspect; or perform the method in any one of the second aspect or the possible implementations of the second aspect, or perform the method in any one of the third aspect or the possible implementations of the third aspect.

According to an eleventh aspect, an embodiment of this application provides a computer-readable medium storing computer programs or instructions. When the computer programs or instructions are executed, a computer is enabled to perform the method in any one of the fourth aspect or the possible implementations of the fourth aspect; or perform the method in any one of the fifth aspect or the possible implementations of the fifth aspect.

According to a twelfth aspect, an embodiment of this application provides a computer program product including computer program code. When the computer program code runs on a computer, the computer is enabled to perform the method in any one of the first aspect or the possible implementations of the first aspect; or perform the method in any one of the second aspect or the possible implementations of the second aspect, or perform the method in any one the third aspect or the possible implementations of the third aspect.

According to a thirteenth aspect, an embodiment of this application provides a computer program product including computer program code. When the computer program code runs on a computer, the computer is enabled to perform the method in any one of the fourth aspect or the possible implementations of the fourth aspect; or perform the method in any one of the fifth aspect or the possible implementations of the fifth aspect.

According to a fourteenth aspect, an embodiment of this application provides a chip including a processor. The processor is coupled to a memory, and the memory is configured to store programs or instructions. When the programs or the instructions are executed by the processor, the chip is enabled to implement the method in any one of the first aspect or the possible implementations of the first aspect, or implement the method in any one of the second aspect or the possible implementations of the second aspect; or implement the method in any one of the third aspect or the possible implementations of the third aspect.

According to a fifteenth aspect, an embodiment of this application provides a communications system including a first terminal device and a second terminal device. The first terminal device may be configured to implement the method in any one of the first aspect or the possible designs of the first aspect, and the second terminal device is configured to implement the method in any one of the second aspect or the possible designs of the second aspect, or is configured to implement the method in any one of the third aspect or the possible designs of the third aspect.

In a possible design, the communications system may further include a trusted communication service platform (which may include a first trusted communication service platform, and may also include a second trusted communication service platform). The trusted communication service platform is configured to implement the method in the any one of the fourth aspect or the possible designs of the fourth aspect, or is configured to implement the method in any one of the fifth aspect or the possible designs of the fifth aspect.

For technical effects that can be achieved in the sixth aspect to the fifteenth aspect, refer to the foregoing analysis and descriptions of the technical effects of the first aspect to the fifth aspect. Details are not described herein again.

### BRIEF DESCRIPTION OF DRAWINGS

FIG. 1 is a schematic diagram of a format of an RTP protocol according to an embodiment of this application;
FIG. 2 is a schematic diagram of an architecture of a mobile communications system according to an embodiment of this application;
FIG. 3 is a schematic flowchart of a communication method according to an embodiment of this application;
FIG. 4 is a schematic diagram of a format of an RTP extension header according to an embodiment of this application;
FIG. 5 is a schematic flowchart of another communication method according to an embodiment of this application;
FIG. 6 is a schematic flowchart of still another communication method according to an embodiment of this application;
FIG. 7A and FIG. 7B are a schematic flowchart of still another communication method according to an embodiment of this application;
FIG. 8A to FIG. 8C are a schematic flowchart of still another communication method according to an embodiment of this application;
FIG. 9 is a schematic diagram of an apparatus 900 according to an embodiment of this application;
FIG. 10 is a schematic diagram of an apparatus 1000 according to an embodiment of this application;
FIG. 11 is a schematic diagram of an apparatus 1100 according to an embodiment of this application;
FIG. 12 is a schematic diagram of an apparatus 1200 according to an embodiment of this application; and
FIG. 13 is a schematic diagram of an apparatus 1300 according to an embodiment of this application.

### DESCRIPTION OF EMBODIMENTS

The following first describes technical terms in embodiments of this application.

1. Roles on a device side: (1) Trusted device certification authority, (2) Trusted device certificate center, and (3) Trusted device manufacturer.

### (1) Trusted device certification authority

A trusted device certification authority is responsible for certifying whether a terminal device (such as a mobile phone or an IoT device) manufactured by a trusted device manufacturer is trusted. Certifying whether the terminal device is trusted includes but is not limited to: whether hardware (such as a chip), a driver, an operating system, and basic software of the terminal device support trusted boot, and whether tamper resistance is supported during collection, processing, sending, and presentation of communication information (such as audio, a video, a temperature, and a speed) of the terminal device. After certification succeeds, a corresponding terminal device model can be included in a trusted device model list and the list is released. The trusted device certification authority can also pay attention to security dynamics in the industry and periodically refresh the trusted device model list. For example, when a terminal device produced several years ago (for example, five years ago) is likely to be cracked by a hacker, and cannot ensure trusted communication, a terminal device model may be deleted from the trusted device model list.

A network service platform of the trusted device certification authority may further provide a trusted device query interface used to query whether a terminal device is a trusted device.

### (2) Trusted device certificate center

A trusted device certificate center is responsible for generating and managing a key pair (secret key K1 & public key K2) of a trusted device digital certificate.

The trusted device certificate center may sign, by using K1, specific device hardware information provided by a trusted device manufacturer, and generate a unique trusted device digital certificate for each terminal device. A public key and a secret key form a key pair. When the secret key is used for signature, the public key may be used for signature decryption, so as to verify trustability of signature information. If verification succeeds, it can be determined that the signature information is not tampered with.

### (3) Trusted device manufacturer

A trusted device manufacturer produces a terminal device, and enables the terminal device to be certified by a trusted device certification authority.

When producing each terminal device, the trusted device manufacturer allocates a key pair (secret key K3 & public key K4) to the terminal device, where K3 is burnt into firmware of the terminal device (for example, K3 is burnt into an internal security domain of the terminal device); and is limited to be read by only bottom-layer trusted system software of the terminal device.

The trusted device manufacturer may submit K4 and device hardware information such as a device model, a device number, and a MAC address of the terminal device to a trusted device certificate center, and the trusted device certificate center generates a trusted device digital certificate of the terminal device and writes the trusted device digital certificate into the firmware of the terminal device.

It should be understood that the trusted device certification authority and the trusted device certificate center may be one authority, or may be different authorities.

2. Roles on a user side: (4) Trusted user certificate center, (5) Trusted user identity authentication authority, and (6) Trusted communication service provider.

### (4) Trusted user certificate center

A trusted user certificate center is responsible for generating and managing a key pair (secret key K5 & public key K6) of a trusted user digital certificate.

The trusted user certificate center may sign, by using K5, user identity credential information provided by a trusted user identity authentication authority, and generate a unique trusted user digital certificate for each user. For example, K8 and identity credential public information provided by a trusted user identity authentication authority are received, a user public digital certificate corresponding to the identity credential public information is generated for a user, and the user public digital certificate is signed by using K5. For another example, identity credential public information provided by a trusted user identity authentication authority, and identity credential privacy information signed by using K9 are received, a user private digital certificate corresponding to the identity credential privacy information is generated for a user, and the user private digital certificate is signed by using K5.

### (5) Trusted user identity authentication authority

A trusted user identity authentication authority supports user registration and user identity credential adding, identity authentication (for example, real-name authentication) on a user, and collects verification information corresponding to the identity credential after the identity authentication succeeds. The verification information may be, for example, information such as a password, a fingerprint, a voiceprint, or a retina feature. An identity credential of each user may correspond to one identity credential ID.

It should be noted that the user identity credential may include one or more pieces of verification information, for example, a password 1, a password 2, a fingerprint 1, a fingerprint 2, a voiceprint 1, and a retina. Whether the identity credential can be trusted may be verified by using the one or more pieces of verification information. Three pieces of verification information are used as an example. For example, it may be considered that the identity credential is trusted if one piece of verification information passes verification, or it may be considered that the identity credential is trusted only when all the three pieces of verification information pass verification. It should be understood that, when one piece of verification information of the identity credential fails to verify the identity credential, whether another piece of verification information successfully verifies the identity credential is not affected.

For example, each user may also include a plurality of identity credentials, for example, different user accounts. Different user identity credential verification information may be the same or different.

The trusted user identity authentication authority is also responsible for generating a key pair for each user.

An identity credential public information key pair is user signature private key K7 & user signature public key K8.

An identity credential privacy information key pair is secret key K9 & public key K10. For example, identity credential privacy information is signed by using K9. The identity credential privacy information signed by using K9 is decrypted by using K10.

Identity credential public information may include one or more of the following: a user account, a user name, a gender, and an identity credential ID. Identity credential privacy information may include one or more of the following: identity credential verification information, an identity card number, a registered residence, and the like. The identity credential verification information includes one or more of the following: one or more passwords, one or more fingerprints, one or more voiceprints, a retina feature, and the like.

The trusted user identity authentication authority is further responsible for submitting K8 and the identity credential public information such as the user name, the identity credential ID, and the gender to a trusted user certificate center, and the trusted user certificate center generates a user public digital certificate corresponding to the user identity credential public information. The trusted user identity authentication authority is further responsible for submitting, to the trusted user certificate center, the identity credential public information such as the user name, the identity credential ID, and the gender, and the user identity credential privacy information signed by using K9, and the trusted user certificate center generates a user private digital certificate corresponding to the user identity credential privacy information.

The trusted user identity authentication authority may periodically perform trusted verification on the user identity credential information (including the identity credential public information and/or the identity credential privacy information), receive a user identity credential information revocation application, and refresh a user identity trusted status. This prevents the user identity credential information from being used by a third party after being disclosed (for example, a password is disclosed).

A network service platform of the trusted user identity authentication authority may provide a user identity trusted status query interface used to query a trusted status of the user identity credential information.

### (6) Trusted communication service provider

A trusted communication service provider provides functions of user registration, subscription, and communication service provisioning. The trusted communication service provider may obtain, based on user authorization, a user public digital certificate, a user private digital certificate, K7, and K10 from a trusted user identity authentication authority, and issue them to a user terminal device, for example, may write them into a global subscriber identity (universal subscriber identity module, SIM) card or encrypt and store them on the terminal device (for example, encrypt and store them in a hardware trust area of the terminal device).

The trusted communication service provider is further responsible for generating and managing a trusted endorsement key pair (trusted endorsement private key K11 & trusted endorsement public key K12).

It should be understood that, the trusted user identity authentication authority, the trusted user certificate center, and the trusted communication service provider may be a same authority, or may be three authorities, or may be two authorities. For example, a government department serves as the trusted user identity authentication authority; a third-party certificate center serves as the trusted user certificate center; and a telecom operator (such as China Mobile/China Unicom/China Telecom) or an internet platform (such as WeChat/Alipay) over the top (over the top, OTT) serves as the trusted communication service provider. For another example, a telecom operator (such as China Mobile/China Unicom/China Telecom) serves as the trusted user identity authentication authority, the trusted user certificate center, and the trusted communication service provider at the same time.

### 3. Session initiation protocol (session initiation protocol, SIP) protocol

A SIP protocol is a text-based application layer control protocol used to create, modify, and release a session with one or more participants. The SIP protocol is described in text, which is flexible, easy to implement, and easy to extend. A part of content in a SIP protocol message includes a message header field. The message header field can be classified into a mandatory header field, a basic header field, and an extension header field.

The mandatory header field is Message-header (Message-header). Message-header includes Via, Call-ID, From, To, Cseq and Max-Forwards. Via is used to describe a path that a current request passes through, that is, address information of a current processing node. A communication response is returned to a sending node along the path recorded in Via. Call-ID is used to identify a SIP call. It should be noted that a multimedia conference may have a plurality of calls, and each call has own Call-ID. From is used to identify a source and an initiator of a request. From includes a tag (tag) parameter, the tag parameter is globally unique, and identifies a user call together with Call-ID. TO is used to identify a destination and a receiver of a request. Cseq is a command sequence number, and each request includes this field. Cseq includes a command name and a decimal sequence number. The sequence number is selected by a requested user and is uniquely determined within a Call-ID range. An initial value of the sequence number is any value, and the sequence number is followed with a same Call-ID value. A Cseq sequence number is increased by 1 when a quest including a different command name and a message body is sent. Max-Forwards is used to define a maximum forwards for a request to reach the destination.

The basic header field includes Contact, Route, and the like. Contact is used to describe a resource identifier (uniform resource identifier, URI) of a request initiator. A format of a URL of the initiator is the same as a format of a URI in the Route header. Contact is used to notify a peer end of own address. When sending a next request message, the peer end can directly send the request message along this address without considering previous routing information. Route indicates a list of routes that a request needs to pass through. In an initial request, the request initiator puts an outbound proxy address and an entry in a path for providing a service into Route.

The extension header field may include Path, which is used to record a URI of an intermediate proxy. The extension header field may also include P-Asserted-Identity, which is used to transmit a public identity of a request initiator between trusted entities.

### 4. Real-time transport protocol (real-time transport protocol, RTP) protocol

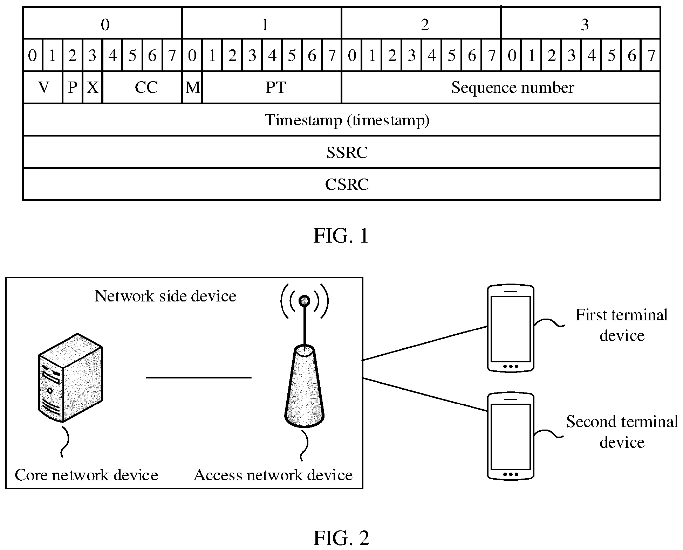

FIG. 1 is a schematic diagram of a format of an RTP protocol.

Version number (V) occupies 2 bits, and is used to indicate an RTP version in use.

Padding bit (P) occupies 1 bit, and if this bit is configured, the end of an RTP packet includes an additional padding byte.

Extension bit (X) occupies 1 bit, and if this bit is configured, a fixed RTP header is followed by an extension header.

Contributing source (contributing source, CSRC) counter (CC) occupies 4 bits, and includes a quantity of CSRCs following a fixed header.

Marker bit (M) occupies 1 bit, and a function of this bit depends on a definition of a configuration file (profile).

Payload type (PT) occupies 7 bits, and identifies a type of an RTP payload/packet.

Sequence number (Sequence Number, SN) occupies 16 bits, and this field is increased by one every time a sender sends an RTP packet, and a receiver may detect packet loss and restores a packet sequence number based on this field. An initial value of the sequence number is randomly distributed.

Timestamp (Timestamp) occupies 32 bits, and records time when a first byte of data in the packet is sampled. The timestamp is initialized as an initial value when a session is started. Even when no signals are sent, the value of the timestamp increases with time.

Synchronization source (synchronization source, SSRC) identifier (Identifier) occupies 32 bits, and a synchronization source indicates a source of a data stream of the RTP packet. SSRC values in a same RTP session need to be unique.

Contributing source identifier list (CSRC Identifier List) occupies 0 to 15 entries. Each entry has 32 bits and is used to identify sources of all RTP packets that contribute to a new packet generated by an RTP mixer. For example, a multichannel voice flow is combined into a single-channel voice flow, an SSRC of each original channel is listed herein.

FIG. 2 is a schematic diagram of an architecture of a mobile communications system to which an embodiment of this application is applied. As shown in FIG. 2, the mobile communications system includes a trusted communication service platform and a plurality of terminal devices (for example, a first terminal device and a second terminal device in FIG. 2). The trusted communication service platform is a platform that is of a trusted communication operator and that provides a trusted communication service for a terminal device, a service platform corresponding to different apps, or the like. The first terminal device and the second terminal device may belong to a same trusted communication service platform, or may belong to different trusted communication service platforms. FIG. 2 shows a case in which the first terminal device and the second terminal device belong to the same trusted communication service platform. A quantity of trusted communication service platforms and a quantity of terminal devices included in the mobile communications system are not limited in this application.

The terminal device in this embodiment of this application may also be referred to as a terminal, user equipment (user equipment, UE), a mobile station, a mobile terminal, or the like. The terminal device may be a mobile phone, a tablet computer, a computer having a wireless transceiver function, a virtual reality terminal device, a vehicle terminal, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in embodiments of this application.

Embodiments of this application may be applied to a 4G mobile communications system, a 5G mobile communications system, or a future mobile communications system. It should be understood that the system architecture and the service scenario described in embodiments of this application are intended to describe the technical solutions in embodiments of this application more clearly, and do not constitute a limitation on the technical solutions provided in embodiments of this application. A person of ordinary skill in the art may understand that, with evolution of a network architecture and emergence of a new service scenario, the technical solutions provided in embodiments of this application are also applicable to a similar technical problem.

This application may be applied to a scenario in which two terminal devices communicate with each other. This application is also applicable to another communication scenario. For example, an internet of things (internet of things, IoT) terminal device, a remote sensor, or an internet of vehicles terminal reports information. For another example, an anchor or a surveillance camera uploads a video stream. For still another example, in non-real time communication, for example, WeChat voice messages, offline generated audio and videos are sent to a third party through an email.

In embodiments of this application, to improve communication security, before sending communication message, the first terminal device first determines whether the first terminal device is a trusted source; and the first terminal device sends the communication message to the second terminal device when determining that the first terminal device is the trusted source, where the communication message carries a trust parameter of the first terminal device, the trust parameter of the first terminal device is used to indicate that the first terminal device is the trusted source, and that the first terminal device is the trusted device includes that the first terminal device is a trusted device and/or a user of the first terminal device is a trusted user. Further, the second terminal device receives the communication message from the first terminal device, and the second terminal device determines, based on the trust parameter of the first terminal device, whether the second terminal device is a trusted source. The communication message may be a communication request, a communication response, a data packet, or the like.

The following describes the solutions provided in embodiments of this application in detail.

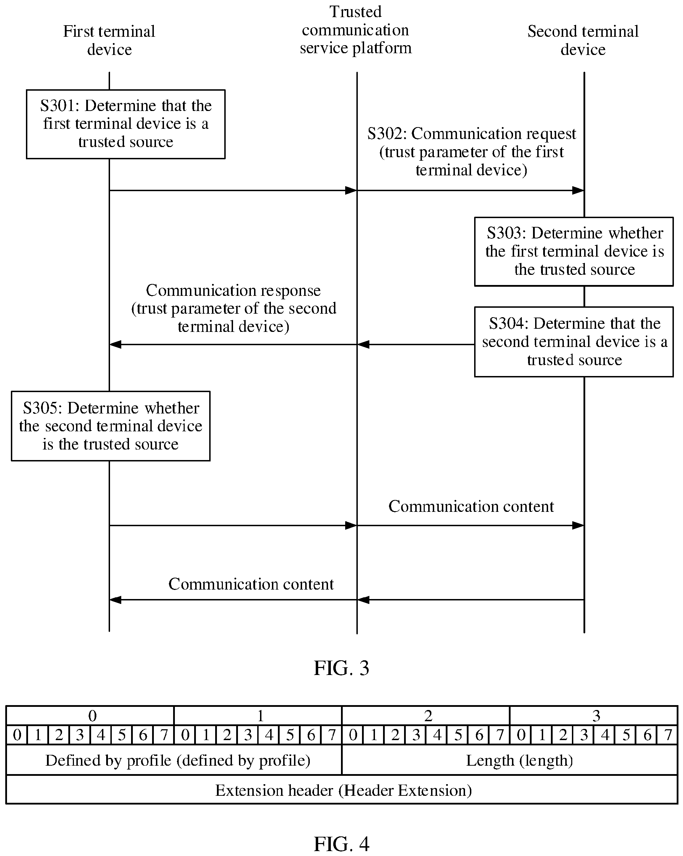

FIG. 3 is a schematic flowchart of a communication method according to an embodiment of this application. For example, a communication connection is established between two terminal devices in FIG. 3. A first terminal device may initiate the communication connection to a second terminal device, or a second terminal device may initiate the communication connection to a first terminal device. The communication connection may be a call connection, or may be an audio/video transmission connection, a short-range communication connection, or the like. In FIG. 3, for example, the first terminal device initiates the communication connection to the second terminal device.

S301: Before initiating a communication request, the first terminal device determines that the first terminal device is a trusted source. That the first terminal device is the trusted source includes that the first terminal device is a trusted device and/or that a user of the first terminal device is a trusted user.

When it is determined that the first terminal device is the trusted device, it may be determined whether a trusted chain of the first terminal device is cracked. If the trusted chain of the first terminal device is not cracked, the first terminal device is the trusted device; or if the trusted chain of the first terminal device is cracked, the first terminal device is an untrusted device.

For example, it may be determined, by using at least one of the following, that the trusted chain of the first terminal device is not cracked: A root is not attacked, a chip is not physically attacked, an operating system is not tampered with, basic software is not tampered with, collected content is not processed by uncontrollable software, or the like.

S302: The first terminal device sends the communication request to the second terminal device, where the communication request carries a trust parameter of the first terminal device. The trust parameter of the first terminal device is used to indicate that the first terminal device is the trusted source.

The trust parameter of the first terminal device may include a first parameter used to represent that the first terminal device is the trusted device, and/or a second parameter used to represent that the user of the first terminal device is the trusted user.

For example, when the first terminal device determines that the first terminal device is the trusted device, the trust parameter of the first terminal device may include a first parameter used to represent that the first terminal device is the trusted device. For another example, when the first terminal device determines that the user of the first terminal device is the trusted user, the trust parameter of the first terminal device may include the second parameter used to represent that the user of the first terminal device is the trusted user. For another example, when the first terminal device determines that the first terminal device is the trusted device and determines that the user of the first terminal device is the trusted user, the trust parameter of the first terminal device may include a first parameter used to represent that the first terminal device is the trusted device and a second parameter used to represent that the user of the first terminal device is the trusted user.

In a possible implementation, the user of the first terminal device may be determined as the trusted user in the following manner.

In one manner, a user private digital certificate corresponding to user identity credential privacy information is verified by using K6 of the first terminal device. After the verification succeeds, whether identity credential verification information in the user private digital certificate matches verification information collected by the first terminal device (for example, the collected verification information may include information entered by a calling user and/or information collected by the first terminal device) is verified. If the verification information of the identity credential in the user private digital certificate matches the verification information collected by the first terminal device, it is considered that the user of the first terminal device is the trusted user; otherwise, it is considered that the user of the first terminal device is an untrusted user.

For example, the user private digital certificate corresponding to the user identity credential privacy information is verified by using K6. Identity credential privacy information encrypted by using K9 is obtained after verification succeeds. The identity credential privacy information encrypted by using K9 may be verified by using K10 (for example, K10 is stored on the first terminal device). After the verification succeeds, the identity credential privacy information may be used to match the verification information collected by the first terminal device. If the identity credential privacy information matches the verification information collected by the first terminal device, it is determined that the user of the first terminal device is the trusted user. If it is determined that the user of the first terminal device is the untrusted user, notification may be displayed to the user. For example, the user is notified that user information of the user is tampered with. In this way, the user may determine, based on the notification, whether to initiate a call.

In another manner, whether the identity credential verification information (which may be preset by the user in the first terminal device) stored in the first terminal device matches the information entered by the calling user and/or the information collected by the first terminal device is determined. If the identity credential verification information stored in the first terminal device matches the information entered by the calling user and/or the information collected by the first terminal device, it is considered that the user of the first terminal device is the trusted user.

Whether the user of the first terminal device is the trusted user may be verified by the first terminal device each time when the communication request is initiated, or may be verified before the communication request is initiated, for example, when the first terminal device is started (for example, a mobile phone is powered on), or is verified by using information such as a password and a fingerprint during unlocking. If verification succeeds, it is considered that the user of the first terminal device is the trusted user.

For example, the first parameter may include a trusted device digital certificate and/or a trusted device signature of the first terminal device. The trusted device signature may be obtained after one or more of the following are signed by using a first secret key (K3) burnt in the first terminal device:
(1) a message digest of the communication request, where the message digest is a check sum value of message content in the communication request, and may be used to verify whether a message is tampered with;
(2) firmware information of the first terminal device, for example, a device model or a device number of the first terminal device;
(3) user identity credential public identity information of the first terminal device, such as a user name and an identity credential ID; or
(4) a signature timestamp.

For example, the second parameter may include a user public digital certificate corresponding to the user identity credential public information of the first terminal device and a trusted user signature of the first terminal device.

The trusted user signature is obtained after one or more of the following are signed by using a user signature secret key (K7):
(1) a message digest of the communication request, where the message digest is a check sum value of message content in the communication request, and may be used to verify whether a message is tampered with;
(2) firmware information of the first terminal device, for example, a device model or a device number of the first terminal device;
(3) user identity credential public identity information of the first terminal device, such as a user name and an identity credential ID; or
(4) a signature timestamp.

S303: After receiving the communication request, the second terminal device verifies, based on the trust parameter of the first terminal device, whether the first terminal device is the trusted source.

Verifying whether a source of the communication request is the trusted source may include verifying whether the first terminal device sending the communication request is the trusted device, and/or verifying whether the user of the first terminal device sending the communication request is the trusted user.

In an example, the trust parameter of the first terminal device includes the first parameter used to represent that the first terminal device is the trusted device. When verifying, based on the trust parameter of the first terminal device, whether the first terminal device is the trusted source, the second terminal device verifies, based on the first parameter, whether the first terminal device is the trusted device. If the second terminal device verifies that the first terminal device is the trusted device, it may indicate that the communication request is not tampered with.

In another example, the trust parameter of the first terminal device includes the second parameter used to represent that the user of the first terminal device is the trusted user. When verifying, based on the trust parameter of the first terminal device, whether the source of the communication request is the trusted source, the second terminal device verifies, based on the second parameter, whether the user of the first terminal device is the trusted user. If the second terminal device verifies that the user of the first terminal device is the trusted user, it may indicate that the communication request is not tampered with.

In still another example, the trust parameter of the first terminal device includes the first parameter and the second parameter.

When the second terminal device verifies, based on the trust parameter of the first terminal device, whether the source of the communication request is the trusted source, in one manner, when either of a fact that the first terminal device is the trusted device and a fact that the user of the first terminal device is the trusted user is verified, it is determined that the first terminal device is the trusted source. In another manner, when verifying that the first terminal device is the trusted device and verifying that the user of the first terminal device is the trusted user, the second terminal device determines that the first terminal device is the trusted source.

For example, the first parameter includes the trusted device digital certificate of the first terminal device and the trusted device signature of the first terminal device. When verifying that the first terminal device is the trusted device, the second terminal device may verify the trusted device digital certificate in the trust parameter by using K2, and extracts K4 in the trusted device digital certificate after the verification succeeds. Then, the second terminal device verifies the trusted device signature in the trust parameter by using K4, and determines, based on the information such as the message digest, the user name, the identity credential ID, and the timestamp in the trusted device signature, that the communication request is not tampered with or attacked.

The second terminal device obtains K2 in many manners. For example, the second terminal device may obtain K2 from a trusted device certificate center, or the trusted device certificate center delivers K2 to the terminal device.

For another example, the second parameter includes the user public digital certificate corresponding to the user identity credential public information of the first terminal device and the trusted user signature of the first terminal device. When verifying that the user of the first terminal device is the trusted user, the second terminal device may verify the user public digital certificate in the trust parameter by using K6, and extract K8 from the user public digital certificate after the verification succeeds. Then, the second terminal device verifies the trusted user signature in the trust parameter by using K8, and determines, based on the information such as the message digest, the device model, the device number, and the timestamp in the trusted user signature, that the communication request is not tampered with or attacked.

It should be understood that the second terminal device may obtain K6 in many manners. For example, the second terminal device may obtain K6 from a trusted user certificate center, or the trusted user certificate center delivers K6 to the terminal device.

S304: The second terminal device determines that the second terminal device is a trusted source, and sends a communication response to the first terminal device.

For example, when it is determined that the second terminal device is the trusted source, the communication response may carry a trust parameter of the second terminal device. The trust parameter of the second terminal device is used to indicate that the second terminal device is the trusted source. For example, when verifying that the first terminal device is the untrusted source, the second terminal device may remind a user of the second terminal device. For example, the communication request is a call request, and the user of the second terminal device may determine, based on reminder information, whether to answer a call. If the call is rejected, the communication response sent by the second terminal device to the first terminal device may carry a rejection reason, where the rejection reason is used to represent that the first terminal device is the untrusted source.

S305: After receiving the communication response, the first terminal device verifies, based on the trust parameter of the second terminal device, whether the second terminal device is the trusted source.

That the second terminal device is the trusted source may include that the second terminal device is a trusted device, and/or that the user of the second terminal device is a trusted user.

A manner of verifying whether the second terminal device is the trusted source is similar to a manner of verifying that the first terminal device is the trusted source. Details are not described herein again.

The trust parameter of the second terminal device may include a third parameter used to represent that the second terminal device is the trusted device, and/or a fourth parameter used to represent that the user of the second terminal device is the trusted user.

For example, the third parameter may include a trusted device digital certificate of the second terminal device and/or a trusted device signature of the second terminal device. The trusted device signature of the second terminal device may be obtained after one or more of the following are signed by using a third secret key (which is referred to as K3' herein for distinguishing from the first secret key K3 burnt in the first terminal device) burnt in the second terminal device:
(1) a message digest of the communication response, where the message digest is a check sum value of message content in the communication response, and may be used to verify whether a message is tampered with;
(2) firmware information of the second terminal device, for example, a device model or a device number of the second terminal device;
(3) user identity credential public identity information of the second terminal device, such as a user name and an identity credential ID; or
(4) a signature timestamp.

For example, the fourth parameter may include a user public digital certificate corresponding to the user identity credential public information of the second terminal device and a trusted user signature of the second terminal device.

The trusted user signature of the second terminal device is obtained after one or more of the following are signed by using a user signature private key (K7'):
(1) a message digest of the communication response, where the message digest is a check sum value of message content in the communication response, and may be used to verify whether a message is tampered with;
(2) firmware information of the second terminal device, for example, a device model or a device number of the second terminal device;
(3) user identity credential public identity information of the second terminal device, such as a user name and an identity credential ID; or
(4) a signature timestamp.

When verifying that the second terminal device is the trusted source, the first terminal device may notify the user of the first terminal device that the second terminal device is the trusted source. The first terminal device may send communication content to the second terminal device, and likewise, the second terminal device may also send communication content to the first terminal device. For example, the communication content may include audio and/or a video.

When verifying that the second terminal device is an untrusted source, the first terminal device may notify the user of the first terminal device that the second terminal device is the untrusted source. The user of the first terminal device may determine, based on the notification, whether to send communication content to the second terminal device.

For example, the third parameter includes the trusted device digital certificate of the second terminal device and the trusted device signature of the second terminal device. When verifying that the second terminal device is the trusted device, the first terminal device may verify the trusted device digital certificate in the trust parameter of the second terminal device by using K2' that forms a key pair with K1', and extract K4' in the trusted device digital certificate after the verification succeeds. Then, the first terminal device verifies the trusted device signature in the trust parameter of the second terminal device by using K4', and determines, based on the information such as the message digest, the user name, the identity credential ID, and the timestamp in the trusted device signature, that the communication response is not tampered with or attacked.

For another example, the fourth parameter includes the user public digital certificate corresponding to the user identity credential public information of the first terminal device and the trusted user signature of the first terminal device. When verifying that the user of the first terminal device is the trusted user, the second terminal device may verify the user public digital certificate in the trust parameter of the second terminal device by using K6', and extract K8' from the user public digital certificate after the verification succeeds. Then, the first terminal device verifies the trusted user signature in the trust parameter by using K8', and determines, based on the information such as the message digest, the device model, the device number, and the timestamp in the trusted user signature, that the communication response is not tampered with or attacked.

In a possible implementation, the communication request and the communication response may use a SIP protocol. For example, the communication request is a call request (invite), and the communication response may be 200 OK. For example, a header field for carrying a trust parameter may be added to a message header field of a SIP protocol message corresponding to each of the communication request and the communication response, and may be added to an extension header field, or may be added to a basic header field. For example, the communication request and the communication response are call requests. The first terminal device is a caller, and the second terminal device is a callee. An extension header field for a trust parameter, for example, a caller-trusted-signature Caller-Trusted-Signature header field, may be added to a SIP protocol message corresponding to the communication request sent by the caller. An extension header field for a trust parameter, for example, a called-trusted-signature Called-Trusted-Signature header field, may be added to a SIP protocol message corresponding to the communication response sent by the callee.

The following describes an example of parameter content included in a possible caller-trusted-signature header field:

Caller-Trusted-Signature: Trusted call = true, User certificate = "user public digital certificate", User signature = "trusted user signature", equipment certificate = "trusted device digital certificate", equipment Signature = "trusted device signature".

The trusted user signature is information signed by using K7, such as verification information of a SIP protocol message, a trusted device digital certificate, a device model, a device number, and a timestamp.

The trusted device signature is information signed by using K3, such as verification information of a SIP protocol message, a trusted device certificate, a device model, a device number, and a timestamp.

Parameter content included in the called-trusted-signature header field is similar to that included in the caller-trusted-signature header field. Details are not described herein again.

To prevent the communication content from being tampered with in a process of communication between the first terminal device and the second terminal device, the trust parameter may be carried when the communication content is sent. For example, one packet used to carry the trust parameter may be sent each time a preset quantity of packets carrying the communication content are sent.

It should be noted that the trust parameter carried in the communication content includes a trusted signature (the trusted device signature and/or the trusted user signature). The trust parameter may further include the user public digital certificate and the trusted device digital certificate, or may include neither the user public digital certificate nor the trusted device digital certificate currently. In a call setup phase, it has been verified, through the communication request and the communication response, that the user public digital certificates and the trusted device digital certificates of the two terminal devices are valid. Therefore, RTP messages sent between the two terminal devices may carry neither the user public digital certificate nor the trusted device digital certificate.

A message for sending the communication content may be an RTP protocol message.

In a possible manner, an RTP packet carrying a trust parameter may be sent by extending a new RTP packet type. One extension RTP packet may be sent each time a preset quantity N of RTP packets carrying the communication content are sent. For ease of description, an RTP packet carrying the communication content is referred to as an RTP data packet, and the RTP packet carrying the trust parameter is referred to as an RTP parameter packet. The trusted device signature in the trust parameter carried in the RTP parameter packet may include at least one of the following:
(1) a message digest of the RTP data packet, where the message digest is a check sum value in the RTP data packet and can be used to verify whether the RTP packet is tampered with, and the message digest may be CRC check sum values of N RTP data packets, may be one CRC check sum value of each RTP data packet, or may be CRC check sum values of several packets in N RTP data packets;
(2) device firmware information, such as a device model or a device number;
(3) user identity credential public identity information, such as a user name and an identity credential ID; or
(4) a signature timestamp.

The trusted user signature of the trust parameter carried in the RTP parameter packet may include one or more of items in (1), (2), (3), or (4).

Signature information in the trusted device signature may be the same as or different from signature information in the trusted user signature. For example, the trusted device signature includes information obtained after items in (1), (2), and (4) are signed by using K3, and the trusted user signature includes information obtained after items in (1), (3), and (4) are signed by using K7.

In the RTP parameter packet, a PT value may be selected from currently unused PT values to indicate that the RTP packet is used to send the trust parameter. For example, one RTP parameter packet is sent each time five RTP data packets are sent, as shown in Table 1.

**Table 1**

| |
|---|
| RTP data packet 1 -communication content |
| RTP data packet 2-communication content |
| RTP data packet 3-communication content |
| RTP data packet 4-communication content |
| RTP data packet 5-communication content |

| **RTP parameter packet 6-trusted signature** |
|---|
| RTP data packet 7-communication content |
| RTP data packet 8-communication content |
| RTP data packet 9-communication content |
| RTP data packet 10-communication content |
| RTP data packet 11-communication content |

| **RTP parameter packet 12-trusted signature** |
|---|
| ··· |

For example, on the basis of Table 1, an RTP parameter packet may be in a format shown in Table 2. It should be understood that Table 2 is merely an example, and each field included in the RTP packet is not specifically limited. In Table 2, for example, a trust parameter carried in communication content includes neither a user public digital certificate nor a trusted device digital certificate.

**Table 2**

| | Field | Filling content |
|---|---|---|
| RTP header | V, P, X, CC, M | Filled according to an RTP standard |
| | PT | For example, 35 |
| | SN, TS, SSRC, CSRC | Filled according to an RTP protocol |
| Trusted user signature (signed by using K7) | RTP packet sequence number for verification | Sequence numbers of an RTP packet 1, an RTP packet 2, an RTP packet 3, an RTP packet 4, and an RTP packet 5 |
| | RTP packet verification information | This field may be CRC check sum values of all verified packets, or may be one CRC check sum value of each packet, |
| | | for example, CRC check sum values of N RTP data packets: CRC (RTP packet 1, RTP packet 2, RTP packet 3, RTP packet 4, and RTP packet 5); |
| | | for another example, a CRC check sum value of each of N RTP data packets: CRC (RTP data packet 1), CRC (RTP data packet 2), CRC (RTP data packet 3), CRC (RTP data packet 4), and CRC (RTP data packet 5) |
| | Device model and device number | Read from the device |
| | Timestamp | Filled based on current system time |
| Trusted device | RTP packet sequence number | Same as the filling manner in the trusted user signature |
| signature (signed by using K3) | for verification | |
| | RTP packet verification information | Same as the filling manner in the trusted user signature |
| | Device model and device number | Read from the device |
| | Timestamp | Filled based on current system time |

In another possible manner, an extension header may be added after an RTP fixed header to carry the trust parameter. The extension header follows the fixed header. For example, if the fixed header includes a CSRC list, the extension header may follow the CSRC list. For example, an X field in an RTP header may be set to 1, and then a variable-length (or fixed-length) extension header is added after the RTP packet header. For example, FIG. 4 is a schematic diagram of a possible format of an RTP extension header. First 16 bits in the extension header are used to identify an identifier or a parameter value. The format of the 16 bits may be defined by an upper-layer profile (defined by profile). In FIG. 4, a length (length) is used to indicate a quantity of bytes occupied by the extension header (Header Extension). The Header Extension is used to indicate the trust parameter. In this manner, one RTP packet carrying the trust parameter may be sent each time a preset quantity N of RTP packets carrying communication content are sent. The trust parameter is carried in the extension header, and a payload part of the RTP packet that carries the trust parameter may still carry the communication content. For example, when N=5, a manner of sending RTP packets is shown in Table 3.

**Table 3**

| |
|---|
| RTP data packet 1 -communication content |
| RTP data packet 2-communication content |
| RTP data packet 3-communication content |
| RTP data packet 4-communication content |
| RTP data packet 5-communication content |

| **RTP packet 6-trusted signature+communication content** |
|---|
| RTP data packet 7-communication content |
| RTP data packet 8-communication content |
| RTP data packet 9-communication content |
| RTP data packet 10-communication content |
| RTP data packet 11-communication content |

| **RTP packet 12-trusted signature+communication content** |
|---|
| ··· |

The trusted device signature in the trust parameter carried in the RTP packet may include at least one of the following:
(1) a message digest of the RTP packet, where the message digest is a check sum value in the RTP packet and can be used to verify whether the RTP packet is tampered with, and the message digest may be a check sum value of the communication content carried in the current RTP packet, or may be CRC check sum values of first N RTP packets (N+1 RTP packets: the first N RTP packets+the current RTP packet), may be a CRC check sum value of each of first N RTP packets, or may be CRC check sum values of several packets in N+1 RTP packets;
(2) device firmware information, such as a device model, or a device number;
(3) user identity credential public identity information, such as a user name and an identity credential ID; or
(4) a signature timestamp.

The trusted device signature of the trust parameter carried in the RTP packet may include one or more of items in (1), (2), (3), and (4).

Signature information in the trusted device signature may be the same as or different from signature information in the trusted user signature. For example, the trusted device signature includes information obtained after items in (1), (2), and (4) are signed by using K3, and the trusted user signature includes information obtained after items in (1), (3), and (4) are signed by using K7.

For example, on the basis of Table 3, an RTP parameter packet may be in a format shown in Table 4. It should be understood that Table 4 is merely an example, and each field included in the RTP packet is not specifically limited. In Table 4, for example, a trust parameter carried in communication content includes neither a user public digital certificate nor a trusted device digital certificate.

**Table 4**

| | Field | Filling content |
|---|---|---|
| RTP header | V, P | Filled according to an RTP protocol |
| | X | 1 |
| | CC, M, PT, SN, TS, SSRC, CSRC | Filled according to an RTP protocol |
| Trusted user signature | RTP packet verification information | CRC check sum value in the RTP packet payload |
| | Device model and device number | Read from the device |
| | Timestamp | Filled based on current system time |
| Trusted device signature | RTP packet verification information | Same as the filling manner in the trusted user signature |
| | Device model and device number | Read from the device |
| | Timestamp | Read from the device |

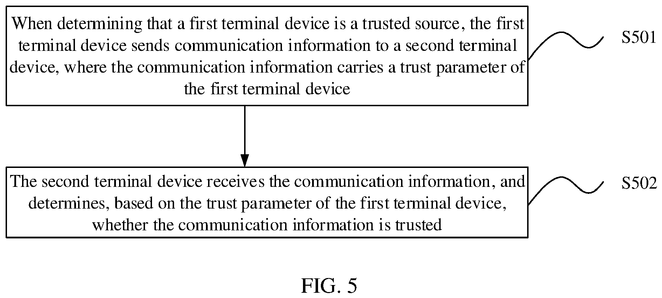

FIG. 5 is a schematic flowchart of another communication method according to an embodiment of this application. For example, one communication device sends communication information to another communication device. The communication device may be a terminal device or a server. For example, one terminal device sends communication information, for example, a WeChat message or a DingTalk message, to another terminal device. For another example, one terminal device uploads information, such as audio and a video, to a server. In FIG. 5, for example, a first terminal device sends communication information to a second terminal device.

S501: When determining that the first terminal device is a trusted source, the first terminal device sends the communication information to the second terminal device, where the communication information includes communication content and a trust parameter of the first terminal device.

S502: The second terminal device receives the communication information, and determines, based on the trust parameter of the first terminal device, whether the communication content is trusted. For explanation of the trust parameter of the first terminal device and determining, based on the trust parameter, whether the communication information is trusted, refer to descriptions in the embodiment corresponding to FIG. 3. Details are not described herein again.

For example, when determining that the communication content is untrusted, the second terminal device may notify a user of the second terminal device. The user of the second terminal device can determine, based on the notification, whether to open the communication content, thereby improving communication security.

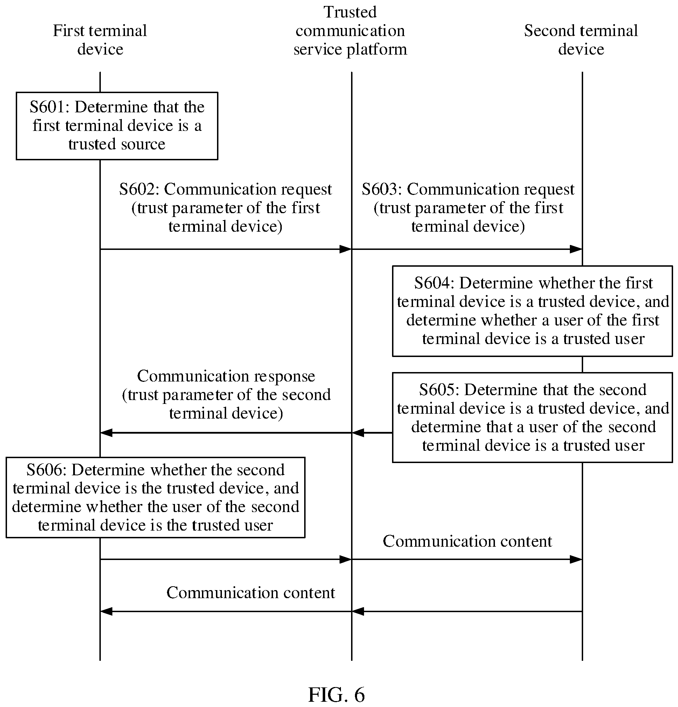

FIG. 6 is a schematic flowchart of a communication method according to an embodiment of this application. The method in FIG. 6 is applicable to a scenario in which a trusted device digital certificate is invalid or a user identity credential is leaked. For example, in a scenario in which a trusted device becomes untrusted (cracked by a hacker) or the user identity credential is leaked (a digital certificate and verification information such as a fingerprint are stolen by a hacker), a malicious user may use an outdated trusted device to initiate a call by using the leaked user identity credential. A trusted device certification authority periodically refreshes a trusted device model list, and deletes a device model from the trusted device model list if the device model has been cracked by a hacker and cannot ensure trusted communication. A network service platform of the trusted device certification authority may further provide a trusted device query interface used to query whether a terminal device is a trusted device. The trusted user identity authentication authority may periodically perform trusted verification on the user identity credential information (including the identity credential public information and/or the identity credential privacy information), receive a user identity credential information revocation application, and refresh a user identity trusted status. This prevents the user identity credential information from being used by a third party after being disclosed (for example, a password is disclosed). The network service platform of the trusted user identity authentication authority may provide the user identity trusted status query interface used to query the trusted status of the user identity credential information.

Based on this, when verifying whether a device is trusted, a terminal device further needs to verify whether a trusted device digital certificate is invalid, and determine, based on device firmware information, whether the device is invalid. When verifying whether a user is trusted, the terminal device further needs to verify whether a user public digital certificate and a user private digital certificate are invalid and whether user credential verification information is invalid. For example, a communication connection is established between two terminal devices in FIG. 6.

For S601 and S602, refer to S301 and S302. Details are not described herein again. In FIG. 6, for example, whether a user is a trusted user and whether a device is a trusted device are verified during verification of a communication request and a communication response.

S603: After receiving the communication request, a trusted communication service platform addresses a second terminal device, sends the communication request to the second terminal device, and transparently transmits a trust parameter. The trust parameter includes a first parameter and a second parameter.

S604: The second terminal device determines, based on the first parameter, whether a first terminal device is a trusted device, and determines, based on the second parameter, whether a user of the first terminal device is a trusted user.

The second terminal device determines, in the following manner based on the first parameter, whether the first terminal device is the trusted device.

A1: The second terminal device determines whether a trusted device digital certificate of the first terminal device in the first parameter is invalid.

There are a plurality of manners for verifying whether the trusted device digital certificate is invalid, and several manners are described below by using examples:
Example 1: Query in real time, through a query interface provided by a network service platform of a trusted device certificate center, whether the trusted device digital certificate of the first terminal device is invalid.
Example 2: The second terminal device may periodically download an invalid device digital certificate from a trusted device certificate center and store the invalid device digital certificate, so that when receiving the communication request, the second terminal device can determine, based on the stored invalid device digital certificate, whether the trusted device digital certificate of the first terminal device is invalid.
Example 3: A trusted device certificate center may periodically deliver an invalid device digital certificate to the terminal device, so that the terminal device stores the invalid device digital certificate on the device.

A2: If the trusted device digital certificate of the first terminal device is valid, the second terminal device verifies a trusted device digital certificate in the trust parameter by using K2, and after the verification succeeds, verifies whether hardware information such as a device model and a device number in the trusted device digital certificate is invalid.

There are a plurality of manners for verifying whether the hardware information of the first terminal device is invalid, and several manners are described below by using examples:
Example 1: Query in real time, through a query interface provided by a network service platform of a trusted device verification authority, whether the hardware information of the first terminal device is invalid.
Example 2: The second terminal device may periodically download a trusted device model list from a trusted device verification authority and store the trusted device model list, so that when receiving the communication request, the second terminal device can determine, based on the stored trusted device model list, whether the hardware information of the first terminal device is invalid.
Example 3: Each time updating a trusted device model list, the trusted device certification authority may deliver the trusted device model list to the terminal device, so that the terminal device stores the trusted device model list on the device.

A3: If it is verified that the hardware information in the trusted device digital certificate is valid, the second terminal device verifies a trusted device signature in the trust parameter by using K4, and when the verification succeeds, determines that the communication request is not tampered with or attacked.

After verification in A1 to A3 is completed, it is determined that the first terminal device is the trusted device.

It should be noted that, if the trusted device certificate center and the trusted device verification authority are one authority, verification may be performed only once to complete verification that the trusted device digital certificate and the hardware information of the device are valid.

The second terminal device determines, in the following manner based on the second parameter, whether the user of the first terminal device is the trusted user.

B1: The second terminal device determines whether a user public digital certificate corresponding to identity credential public information of the second terminal device in the second parameter is invalid.

There are a plurality of manners for verifying whether the user public digital certificate is invalid, and several manners are described below by using examples:
Example 1: Query in real time, through a query interface provided by a network service platform of a trusted user certificate center, whether the user public digital certificate of the first terminal device is invalid.
Example 2: The second terminal device may periodically download an invalid user public digital certificate from a trusted user certificate center and store the invalid user public digital certificate, so that when receiving the communication request, the second terminal device can determine, based on the stored invalid user public digital certificate, whether the user public digital certificate of the first terminal device is invalid.
Example 3: When determining to add an invalid user public digital certificate, a trusted user certificate center may notify the terminal device, so that the terminal device stores the invalid user public digital certificate on the device. Further, after receiving the communication request, the second terminal device verifies whether the user public digital certificate of the first terminal device is invalid.

B2: If the user public digital certificate of the first terminal device is valid, the second terminal device verifies the user public digital certificate in the trust parameter by using K6, and after the verification succeeds, verifies whether user credential public information in the user public digital certificate is invalid.

There are a plurality of manners for verifying whether the user credential public information of the first terminal device is invalid, and several manners are described below by using examples:
Example 1: Query in real time, through a query interface provided by a network service platform of a trusted user identity authentication authority, whether the user credential public information of the first terminal device is invalid.
Example 2: The second terminal device may periodically download invalid user credential public information from a trusted user identity authentication authority and store the invalid user credential public information, so that when receiving the communication request, the second terminal device can determine, based on the stored invalid user credential public information, whether the user credential public information of the first terminal device is invalid.
Example 3: Each time updating invalid user credential public information, the trusted user identity authentication authority may deliver the invalid user credential public information to the terminal device, so that the terminal device stores the invalid user credential public information on the device. Further, after receiving the communication request, the second terminal device verifies whether the user credential public information of the first terminal device is invalid.

B3: If it is verified that the user credential public information in the user public digital certificate is valid, the second terminal device verifies a trusted user signature in the trust parameter by using K8, and when the verification succeeds, determines that the communication request is not tampered with or attacked.

After verification in B1 to B3 is completed, it is determined that the user of the first terminal device is the trusted user.

It should be noted that, if the user certification center and the trusted user identity authentication authority are one authority, verification may be performed only once to complete verification that the user public digital certificate and the user credential public information are valid.

S605: The second terminal device sends the communication response to the first terminal device when verifying that the second terminal device is a trusted device and a user of the second terminal device is a trusted user. The communication response carries a trust parameter of the second terminal device. The trust parameter of the second terminal device carries a third parameter and a fourth parameter.

For example, when verifying that the first terminal device is an untrusted device or the user of the first terminal device is an untrusted user, the second terminal device may notify the user of the second terminal device that the first terminal device is untrusted. Therefore, the user of the second terminal device can determine whether to receive the request, and if receiving the request, send the communication response (used to receive the request from the first terminal device), where the communication response carries the trust parameter of the second terminal device. For example, if the user of the second terminal device does not receive the request, the sent communication response (used to reject the request from the first terminal device) may no longer carry the trust parameter of the second terminal device, and the communication connection is terminated. If verifying that the second terminal device is an untrusted device or the user of the second terminal device is an untrusted user, the second terminal device may include, in the communication response sent to the first terminal device, indication information used to indicate that the second terminal device is an untrusted source. Therefore, when receiving the communication response that carries the indication information, the first terminal device may notify the user that the second terminal device is the untrusted source, so that the user of the second terminal device can determine, based on the notification, whether to continue sending communication content to the second terminal device.

For explanations of the third parameter and the fourth parameter, refer to the embodiment shown in FIG. 3. Details are not described herein again.

S606: After receiving the communication response, the first terminal device verifies, based on the third parameter, whether the second terminal device is the trusted device, and verifies, based on the fourth parameter, whether the user of the second terminal device is the trusted user.

Manners of verifying whether the second terminal device is the trusted device and whether the user of the second terminal device is the trusted user are similar to manners of verifying, by the second terminal device, whether the first terminal device is the trusted device and whether the user of the first terminal device is the trusted user. Details are not described herein again.

For example, when verifying that the second terminal device is the trusted device and verifies that the user of the second terminal device is the trusted user, the first terminal device may notify the user that the second terminal device is the trusted source. For another example, when verifying that the second terminal device is the untrusted device and verifies that the user of the second terminal device is the untrusted user, the first terminal device may notify the user that the second terminal device is the untrusted source. Therefore, the user of the first terminal device can determine, based on the notification, whether to send the communication content to the second terminal device.

In FIG. 6, for example, the communication content is transmitted between the first terminal device and the second terminal device. That is, the first terminal device may send the communication content to the second terminal device, and likewise, the second terminal device may also send the communication content to the first terminal device.

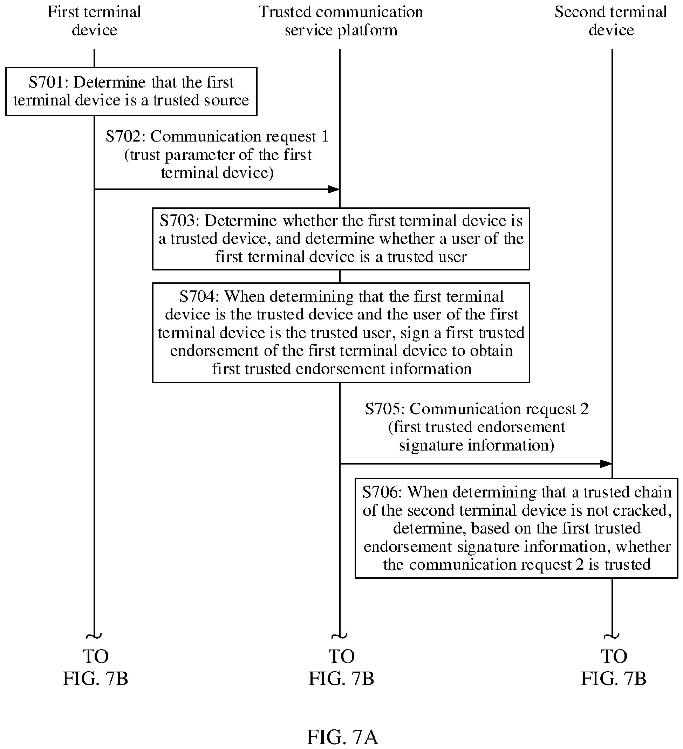

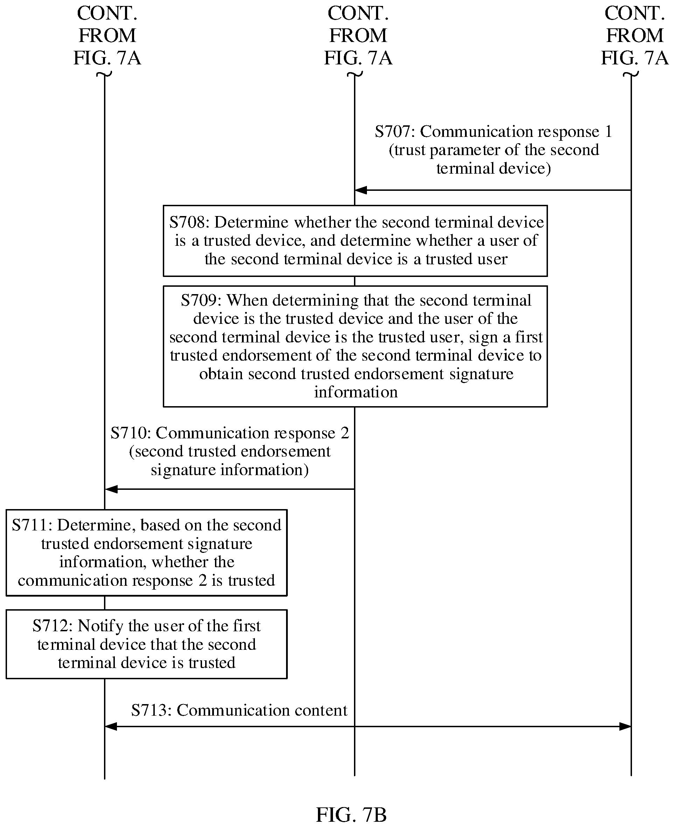

In the foregoing embodiments corresponding to FIG. 3 to FIG. 6, trusted communication is ensured from a perspective of verification performed on both terminal devices. The verification of whether the execution device is trusted and whether the user is trusted may also be performed by a network side. FIG. 7A and FIG. 7B are a schematic flowchart of still another communication method according to an embodiment of this application. A trusted communication service platform is used to verify whether a device is trusted and whether a user is trusted. In FIG. 7A and FIG. 7B, the trusted communication service platform may be a third-party service platform or the like. For example, when a third-party app (for example, WeChat) is used for a communication connection between a first terminal device and a second terminal device, the trusted communication service platform may be a third-party service platform (for example, a WeChat service platform). For another example, when a first terminal device performs an audio and video call with a second terminal device, the trusted communication service platform may be an operator service platform, for example, a China Telecom platform, a China Mobile platform, or a China Unicom service platform.

For S701 and S702, refer to S301 and S302. Details are not described herein again. In FIG. 7A and FIG. 7B, for example, whether a user is a trusted user and whether a device is a trusted device are verified during verification of a communication request and a communication response. A trust parameter in the communication request includes a first parameter and a second parameter. For distinguishing, a communication request carrying a trust parameter is referred to as a communication request 1.

S703: After receiving the communication request, the trusted communication service platform determines, based on the first parameter, whether a first terminal device is a trusted device, and determines, based on the second parameter, whether a user of the first terminal device is a trusted user.

When verifying whether the first terminal device is the trusted device and whether the user of the first terminal device is the trusted user, the trusted communication service platform may use manners in which the second terminal device verifies whether the first terminal device is the trusted device and whether the user of the first terminal device is the trusted user in the foregoing embodiment corresponding to FIG. 3 or FIG. 6. Details are not described herein again.

S704: When determining that the first terminal device is the trusted device and the user of the first terminal device is the trusted user, the trusted communication service platform signs a first trusted endorsement of the first terminal device to obtain a first trusted endorsement trusted device signature.

For example, the trusted communication service platform may sign the first trusted endorsement by using K11, and the first trusted endorsement may include one or more of the following parameters:
(1) verification information of the trust parameter of the first terminal device, for example, including one or more of a message digest of the communication request 1 (or a communication request 2), device firmware information, and user identity credential public identity information;
(2) an identifier of the trusted communication service platform;
(3) a timestamp: signature time;
(4) a public key K2 for verifying a trusted device digital certificate; and
(5) a public key K6 used for verifying a trusted user digital certificate (including a user public digital certificate and/or a user private digital certificate).

S705: The trusted communication service platform adds first trusted endorsement signature information to the communication request 1 to obtain the communication request 2, and sends the communication request 2 to the second terminal device.

For example, when the trusted communication service platform obtains the communication request 2, the communication request 2 may carry or may not carry the trust parameter of the first terminal device in the communication request 1.

S706: After receiving the communication request 2, when determining that the second terminal device is a trusted source, the second terminal device determines, based on the first trusted endorsement signature information, whether the communication request 2 is trusted. Specifically, when determining that a trusted chain of the second terminal device is not cracked, the second terminal device verifies the first trusted endorsement signature information in the communication request 2 by using K12, and determines, based on the digest information, the identifier of the trusted communication service platform, or the timestamp in the first trusted endorsement obtained after verification, whether the communication request 2 is trusted (tampered with or attacked).

S707: The second terminal device sends a communication response 1 to the first terminal device, where the communication response 1 carries a trust parameter of the second terminal device. The trust parameter of the second terminal device includes a third parameter and a fourth parameter. For descriptions of the third parameter and the fourth parameter, refer to descriptions in the embodiment corresponding to FIG. 3. Details are not described herein again.

For example, when verifying that the communication request 2 is trusted, the second terminal device may notify the user of the second terminal device that the first terminal device is the trusted source. The communication response 1 may carry the trust parameter of the second terminal device.

For another example, when verifying that the communication request 2 is untrusted, the second terminal device may notify the user of the second terminal device that the first terminal device is the untrusted source. The user of the second terminal device may determine whether to receive the request. If the request is not received, the second terminal device may send communication rejection to the first terminal device, where the communication rejection may not carry the trust parameter of the second terminal device.

S708: After receiving the communication response 1, the trusted communication service platform verifies, based on the third parameter, whether the second terminal device is the trusted device, and verifies, based on the fourth parameter, whether the user of the second terminal device is the trusted user.

S709: When determining that the second terminal device is the trusted device and the user of the second terminal device is the trusted user, the trusted communication service platform signs a second trusted endorsement of the second terminal device to obtain second trusted endorsement signature information.

For example, the trusted communication service platform may sign the second trusted endorsement by using K11, and the second trusted endorsement may include one or more of the following parameters:
(1) verification information of the trust parameter of the second terminal device, for example, including one or more of a message digest of the communication response 1 (or a communication response 2), device firmware information, and user identity credential public identity information;
(2) an identifier of the trusted communication service platform;
(3) a timestamp: signature time;
(4) a public key (K2') for verifying a trusted device digital certificate of the second terminal device; and
(5) a public key (K6') for verifying a trusted user digital certificate of the second terminal device.

S710: The trusted communication service platform replaces the first trusted endorsement signature information in the communication response 1 with the second trusted endorsement signature information to obtain a communication response 2, and sends the communication response 2 to the first terminal device.

For example, when the trusted communication service platform obtains the communication response 2, the communication response 2 may carry or may not carry the trust parameter of the second terminal device in the communication response 1.

For example, a header field used to carry trusted endorsement signature information (the first trusted endorsement signature information or second trusted endorsement signature information) may be added to message header fields of SIP protocol messages corresponding to the communication request 2 and the communication response 2 respectively, may be added to an extension header field, or may be added to a basic header field. For example, the communication request 2 and the communication response 2 are call requests. The first terminal device is a caller, and the second terminal device is a callee. An extension header field for the trusted endorsement signature information, for example, caller-trusted-signature-accreditation Caller-Trusted-Signature-accreditation header field, may be added to a SIP protocol message corresponding to a communication request sent by the caller. An extension header field for the trusted endorsement signature information, for example, a called-trusted-signature-accreditation Called-Trusted-Signature-accreditation header field, may be added to a SIP protocol message corresponding to a communication response sent by the callee.

The following describes an example of parameter content included in a possible caller-trusted-signature-accreditation header field:

Caller-Trusted-Signature-accreditation: Signature accreditation = "trusted subject endorsement signature".

The trusted endorsement signature information is information such as verification information of a trust parameter of a caller signed by using K11, an identifier of a trusted subject, and a timestamp.

Extension of the called-trusted-signature-accreditation header field of the called is similar to that of the caller. Details are not described again.

S711: After receiving the communication response 2, the first terminal device determines, based on the second trusted endorsement signature information, whether the communication response 2 is trusted. Specifically, the first terminal device may verify the second trusted endorsement signature information in the communication response 2 by using K12, and determine, based on the digest information, the identifier of the trusted communication service platform or the timestamp in the second trusted endorsement obtained after verification, whether the communication response 2 is trusted (tampered with or attacked).

For example, the terminal device may locally store K12 corresponding to a supported trusted communication service provider, so as to prevent from storing/querying public key information of all users.

S712: When verifying that the communication response 2 is trusted, the first terminal device may notify the user of the first terminal device that the second terminal device is trusted. After the foregoing communication connection is completed, the communication content may be transmitted between the first terminal device and the second terminal device.

S713: The first terminal device sends the communication content to the second terminal device. The communication content may be sent in an RTP protocol.

For example, to prevent the communication content from being tampered with, a trusted signature (including a trusted device signature and a trusted user signature) of the first terminal device may be carried in a to-be-sent communication content RTP packet. After receiving the communication content, the second terminal device performs trusted verification on the first terminal device and the user of the first terminal device by using K4 and K8 based on the trusted signature in the communication content. If verification succeeds, the user is notified that the communication content is trusted.

The second terminal device obtains K4 and K8 corresponding to the first terminal device in the following manners: In one manner, after receiving the communication request 1 from the first terminal device, when generating the communication request 2, if the communication request 2 does not carry the trust parameter of the first terminal device, the trusted communication service platform may include K4 and K8 in the communication request 2. For example, the trusted communication service platform may include K4 and K8 in the first trusted endorsement. In another manner, if the communication request 2 carries the trust parameter of the first terminal device, the second terminal device may extract K8 from the user public digital certificate included in the trust parameter of the first terminal device, and extract K4 from the trusted device digital certificate.

Manners for the first terminal device to obtain K4' and K8' that correspond to the second terminal device are similar to the manners for the second terminal device to obtain K4 and K8 that correspond to the first terminal device. Details are not described again.

A verification mechanism for the second terminal device to send the communication content to the first terminal device is similar to a verification mechanism for the first terminal device to send the communication content to the second terminal device. Details are not described again.

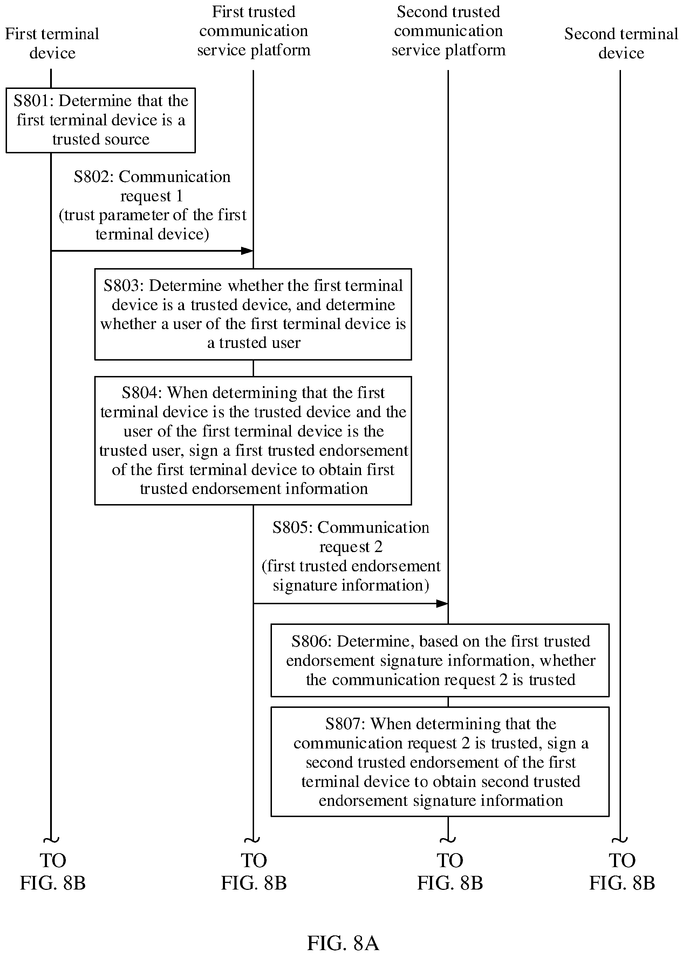

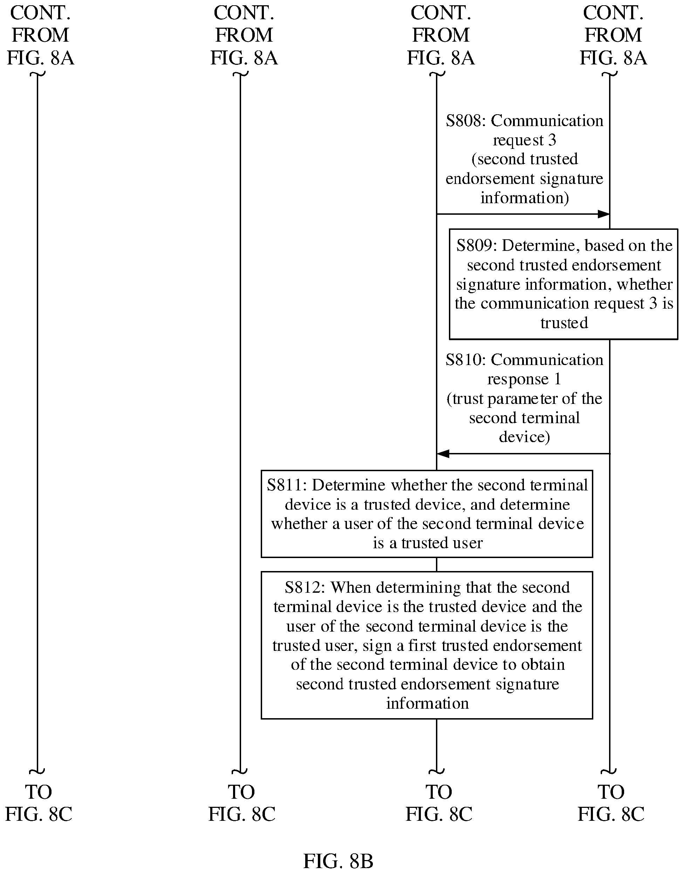

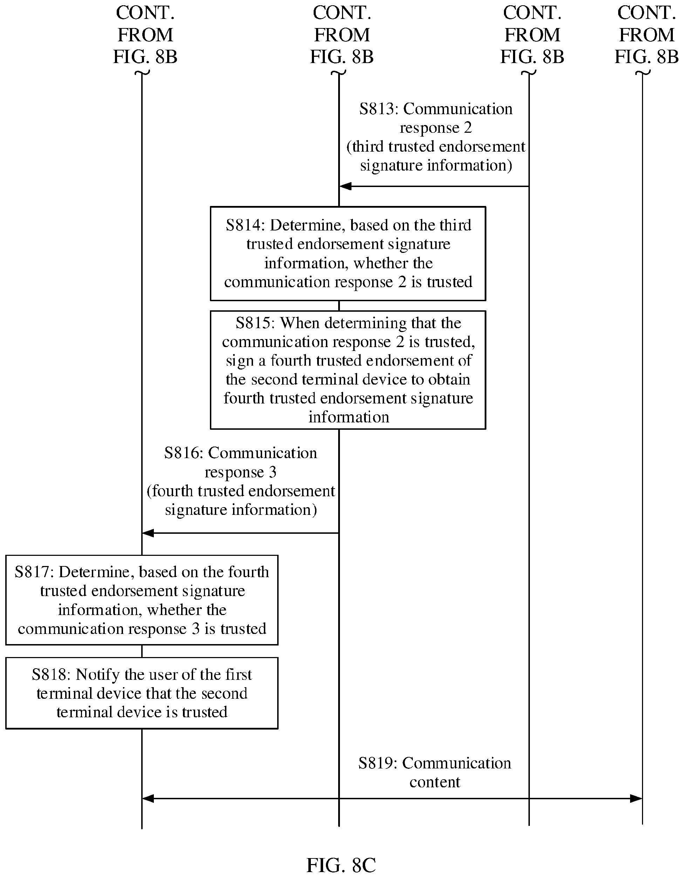

When terminal devices of both communication parties belong to different trusted communication service providers, for example, users of different operators in a country, users of different operators in different countries, and different app users (a Facebook user and a WeChat user), a multi-segment trusted endorsement solution may be used for communication. Refer to FIG. 8A to FIG. 8C. A key pair of trusted endorsement signature information generated by a trusted communication operator 1 is a secret key K11 and a public key K12. A key pair of trusted endorsement signature information generated by a trusted communication operator 2 is a secret key K11' and a public key K12'. For example, a first terminal device belongs to a trusted communication service provider 1, and a second terminal device belongs to a trusted communication service provider 2. A trusted communication service platform corresponding to the trusted communication service provider 1 is a first trusted communication service platform, and a trusted communication service platform corresponding to the trusted communication service provider 2 is a second trusted communication service platform.

For S801 and S802, refer to S301 and S302. Details are not described herein again. For ease of distinguishing, a communication request sent by the first terminal device is referred to as a communication request 1. A trust parameter carried in the communication request 1 includes a first parameter and a second parameter.

S803: After receiving the communication request 1, the first trusted communication service platform determines, based on the first parameter, whether the first terminal device is a trusted device, and determines, based on the second parameter, whether a user of the first terminal device is a trusted user. In FIG. 8A to FIG. 8C, for example, whether a user is a trusted user and whether a device is a trusted device are verified during verification of a communication request and a communication response. Certainly, whether a user is a trusted user or whether a device is a trusted device may be only verified according to a requirement.

When verifying whether the first terminal device is the trusted device and whether the user of the first terminal device is the trusted user, the first trusted communication service platform may use manners in which the second terminal device verifies whether the first terminal device is the trusted device and whether the user of the first terminal device is the trusted user in the foregoing embodiment corresponding to FIG. 3 or FIG. 6. Details are not described herein again.

S804: When determining that the first terminal device is the trusted device and the user of the first terminal device is the trusted user, the first trusted communication service platform signs a first trusted endorsement of the first terminal device to obtain first trusted endorsement signature information.

For example, the first trusted communication service platform may sign the first trusted endorsement by using K11, and the first trusted endorsement may include one or more of the following parameters:
verification information (digest information) of the trust parameter of the first terminal device, an identifier of the first trusted communication service platform, or a timestamp.

S805: The first trusted communication service platform adds the first trusted endorsement signature information to the communication request 1 to obtain a communication request 2, and sends the communication request 2 to the second trusted communication service platform.

For example, when determining that the first terminal device is an untrusted device or the user of the first terminal device is an untrusted user, the first trusted communication service platform may add, to the communication request 1, indication information used to indicate that the first terminal device is an untrusted source. If receiving the added indication information used to indicate that the first terminal device is the untrusted source, the second trusted communication service platform may not perform any processing on the communication request 1 and forward the communication request 1 to the second terminal device. The second terminal device may notify, based on the communication request 1, a user of the second terminal device that the first terminal device is the untrusted source. The user of the second terminal device may determine, based on the notification, whether to receive the request.

S806: After receiving the communication request 2, the second trusted communication service platform determines, based on the first trusted endorsement signature information, whether the communication request 2 is trusted. Specifically, the second trusted communication service platform may verify the first trusted endorsement signature information in the communication request 2 by using K12, and determine, based on the first trusted endorsement obtained after verification, whether the communication request 2 is trusted (tampered with or attacked).

S807: When verifying that the communication request 2 is trusted, the second trusted communication service platform signs a second trusted endorsement of the first terminal device to obtain second trusted endorsement signature information.

For example, the first trusted communication service platform may sign the second trusted endorsement by using K11', and the second trusted endorsement may include one or more of the following parameters:
verification information (digest information) of the trust parameter of the first terminal device, an identifier of the second trusted communication service platform, a timestamp, a public key K2 used to verify a trusted device digital certificate, or a public key K6 used to verify a trusted user digital certificate (including a user public digital certificate and/or a user private digital certificate).

S808: The first trusted communication service platform replaces the first trusted endorsement signature information in the communication request 2 with the second trusted endorsement signature information to obtain a communication request 3, and sends the communication request 3 to the second terminal device.

S809: After receiving the communication request 3, the second terminal device determines, based on the second trusted endorsement signature information, whether the communication request 3 is trusted. Specifically, the second terminal device may verify the second trusted endorsement signature information in the communication request 3 by using K12', and determine, based on the second trusted endorsement obtained after verification, whether the communication request 3 is trusted (tampered with or attacked).

S810: The second terminal device sends a communication response 1 to the first terminal device, where the communication response 1 carries a trust parameter of the second terminal device. The trust parameter of the second terminal device includes a third parameter and a fourth parameter. For descriptions of the third parameter and the fourth parameter, refer to descriptions in the embodiment corresponding to FIG. 3. Details are not described herein again.

S811: After receiving the communication response 1, the second trusted communication service platform verifies, based on the third parameter, whether the second terminal device is a trusted device, and verifies, based on the fourth parameter, whether the user of the second terminal device is a trusted user.

S812: When determining that the second terminal device is the trusted device and the user of the second terminal device is the trusted user, the second trusted communication service platform signs a third trusted endorsement of the second terminal device to obtain third trusted endorsement signature information.

For example, the second trusted communication service platform may sign the third trusted endorsement by using K11', where the third trusted endorsement may include one or more of the following parameters: verification information (digest information) of the trust parameter of the second terminal device, an identifier of the second trusted communication service platform, or a timestamp.

S813: The second trusted communication service platform adds the third trusted endorsement signature information to the communication response 1 to obtain a communication response 2, and sends the communication response 2 to the first trusted communication service platform.

S814: After receiving the communication response 2, the first trusted communication service platform determines, based on the third trusted endorsement signature information, whether the communication response 2 is trusted. Specifically, the first trusted communication service platform verifies the third trusted endorsement signature information in the communication response 2 by using K12, and determines, based on the third trusted endorsement obtained after verification, whether the communication response 2 is trusted (tampered with or attacked).

S815: When verifying that the communication response 2 is trusted, the first trusted communication service platform signs a fourth trusted endorsement of the second terminal device to obtain fourth trusted endorsement signature information.

For example, the first trusted communication service platform may sign the fourth trusted endorsement by using K11, where the fourth trusted endorsement may include one or more of the following parameters: verification information (digest information) of the trust parameter of the second terminal device, an identifier of the first trusted communication service platform, or a timestamp.

S816: The first trusted communication service platform replaces the third trusted endorsement signature information in the communication response 2 with the fourth trusted endorsement signature information to obtain a communication response 3, and sends the communication response 3 to the first terminal device.

S817: After receiving the communication response 3, the first terminal device determines, based on the fourth trusted endorsement signature information, whether the communication response 3 is trusted. Specifically, the first terminal device verifies the fourth trusted endorsement signature information in the communication response 3 by using K12, and determines, based on the fourth trusted endorsement obtained after verification, whether the communication response 3 is trusted (tampered with or attacked).

S818: When verifying that the communication response 3 is trusted, the first terminal device may notify the user of the first terminal device that the second terminal device is trusted. After the foregoing communication connection is completed, communication content may be transmitted between the first terminal device and the second terminal device.

For S819, refer to S713. Details are not described herein again.

In the foregoing embodiment, a multi-segment trusted endorsement mechanism is used, and the terminal device only needs to locally store K12 of a trusted communication service provider to which the terminal device belongs. This can prevent the terminal device from storing/querying public key information of various terminal devices worldwide, and reduce occupied resources.

It should be noted that this embodiment provided in this application is applicable to a scenario in which there are three or more endorsements. For example, a first terminal device belongs to a first trusted communication service platform, and a second terminal device belongs to a second trusted communication service platform. However, a network connection cannot be established between the first trusted communication service platform and the second trusted communication service platform. For example, the first trusted communication service platform and the second trusted communication service platform belong to different operator platforms. Therefore, communication cannot be established between the two operators without subscription. A connection may be established between the first trusted communication service platform and the second trusted communication service platform by using one or more other trusted communication service platforms. In this case, after receiving a communication message that carries trusted endorsement signature information, the another trusted communication service platform verifies, based on the trusted endorsement signature information, whether the communication message is trusted, and forwards the communication message. For verification manner for the another trusted communication service platform, refer to the descriptions in the embodiments corresponding to FIG. 7A to FIG. 8C. Details are not described herein again.

Corresponding to the methods provided in the foregoing method embodiments, embodiments of this application further provide corresponding apparatuses. The apparatuses include corresponding modules configured to perform the foregoing embodiments. The module may be software, hardware, or a combination of software and hardware.

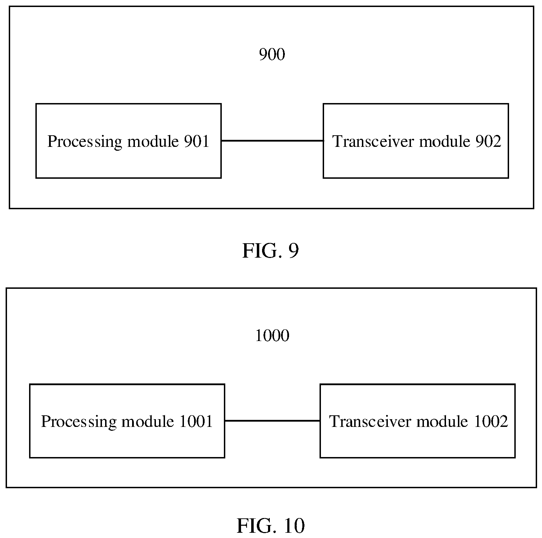

FIG. 9 is a schematic diagram of a structure of an apparatus. The apparatus 900 may be a terminal device, or may be a chip, a chip system, a processor, or the like that supports the terminal device in implementing the foregoing methods. The apparatus 800 may be configured to implement the method performed by the terminal device (including the first terminal device and the second terminal device) in the foregoing method embodiments. For details, refer to the descriptions in the foregoing method embodiments. The apparatus 900 includes a processing module 901 and a transceiver module 902.

In a possible application scenario, the apparatus 900 is applied to a first terminal device.

The processing module 901 is configured to determine that the first terminal device is a trusted source.

The transceiver module 902 is configured to send a communication message to a second terminal device, where the communication message carries a trust parameter of the first terminal device, and the trust parameter of the first terminal device is used to indicate that the first terminal device is the trusted source; and that the first terminal device is the trusted source includes that the first terminal device is a trusted device and/or that a user of the first terminal device is a trusted user.

For example, the trust parameter of the first terminal device includes a first parameter used to represent that the first terminal device is the trusted device, and/or a second parameter used to represent that the user of the first terminal device is the trusted user. The first parameter includes a trusted device digital certificate and/or a trusted device signature of the first terminal device, the second parameter includes a user public digital certificate of the first terminal device and/or a trusted user signature of the first terminal device, and the user public digital certificate of the first terminal device includes user identity credential public information of the first terminal device.

For example, the trusted device signature is obtained after one or more of the following are signed by using a first secret key (K3) burnt in the first terminal device:
a message digest of the communication message, firmware information of the first terminal device, the user identity credential public information of the first terminal device, or a signature timestamp.

For example, the trusted user signature of the first terminal device is obtained after one or more of the following are signed by using a user signature private key (K7):
a message digest of the communication message, firmware information of the first terminal device, the user identity credential public information of the first terminal device, or a signature timestamp.

In a possible implementation, if that the first terminal device is the trusted source includes that the user of the first terminal device is the trusted user, when determining that the user of the first terminal device is the trusted user, the processing module 901 is specifically configured to: verify a user private digital certificate of the first terminal device, where the user private digital certificate includes user identity credential privacy information of the first terminal device; and when successfully verifying the user private digital certificate and determining that identity credential verification information included in the user identity credential privacy information of the first terminal device matches collected user verification information, determines that the user of the first terminal device is the trusted user.

In a possible implementation, if that the first terminal device is the trusted source includes that the first terminal device is the trusted device, when determining that the first terminal device is the trusted device, the processing module 901 is specifically configured to determine that a trusted chain of the first terminal device is not cracked.

In another possible application scenario, the apparatus 900 is applied to a second terminal device.

The transceiver module 902 is configured to receive a communication message from a first terminal device, where the communication message carries a trust parameter of the first terminal device, the trust parameter of the first terminal device is used to indicate whether the first terminal device is a trusted source, and that the first terminal device is the trusted source includes that the first terminal device is a trusted device and/or that a user of the first terminal device is a trusted user.

The processing module 901 is configured to verify, based on the trust parameter of the first terminal device, whether the first terminal device is the trusted source.

In a possible implementation, the trust parameter of the first terminal device includes a first parameter used to determine that the first terminal device is the trusted device. When verifying, based on the trust parameter of the first terminal device, whether the first terminal device is the trusted device, the processing module 901 is specifically configured to:
when the first parameter includes a trusted device digital certificate of the first terminal device, verify the trusted device digital certificate of the first terminal device, and when verification succeeds, determine that the first terminal device is the trusted device; or
when the first parameter includes a trusted device digital certificate of the first terminal device and a trusted device signature of the second terminal device, verify the trusted device digital certificate of the first terminal device; if verification succeeds, verify the trusted device signature of the second terminal device; and when verifying that the trusted device signature of the second terminal device is not tampered with, determine that the first terminal device is the trusted device; or
when the first parameter includes a trusted device signature of the first terminal device, determine, when verifying that the trusted device signature of the second terminal device is not tampered with, that the first terminal device is the trusted device.

In a possible implementation, the trust parameter of the first terminal device includes a first parameter used to verify that the first terminal device is the trusted device. When verifying, based on the trust parameter of the first terminal device, whether the first terminal device is the trusted device, the processing module 901 is specifically configured to:
when the first parameter includes a trusted device digital certificate of the first terminal device, and the trusted device digital certificate of the first terminal device is valid, verify the trusted device digital certificate of the first terminal device, and when verification succeeds, determine that the first terminal device is the trusted device; or
when the first parameter includes a trusted device digital certificate of the first terminal device and a trusted device signature of the first terminal device, determine that the trusted device digital certificate of the first terminal device is valid, and verify the trusted device digital certificate of the first terminal device; when verification succeeds, verify the trusted device signature of the first terminal device when verifying that hardware information of the first terminal device included in the trusted device digital certificate of the first terminal device is valid; and when verifying that the trusted device signature of the first terminal device is not tampered with, determine that the first terminal device is the trusted device.

In a possible implementation, the trusted device signature of the first terminal device is related to a first secret key burnt in the first terminal device. When verifying that the trusted device signature of the first terminal device is not tampered with, the processing module 901 is specifically configured to: verify the trusted device signature of the first terminal device by using a second secret key, and when verification succeeds, determine that the trusted device signature of the first terminal device is not tampered with, where the first secret key and the second secret key are a key pair.

In a possible implementation, the trusted device signature of the first terminal device is obtained after one or more of the following are signed by using the first secret key: a message digest of the communication message, firmware information of the first terminal device, user public identity information of the first terminal device, or a signature timestamp.

In a possible implementation, the trust parameter of the first terminal device includes a second parameter used to verify that the user of the first terminal device is the trusted user. When verifying, based on the trust parameter of the first terminal device, whether the user of the first terminal device is the trusted user, the processing module 901 is specifically configured to:
when the second parameter includes a user public digital certificate of the first terminal device, verify the user public digital certificate of the first terminal device, and when verification succeeds, determine that the user of the first terminal device is the trusted user; or
when the second parameter includes a user public digital certificate of the first terminal device and a trusted user signature of the first terminal device, verify the user public digital certificate of the first terminal device; when verification succeeds, verify the trusted user signature of the first terminal device; and when verifying that the trusted user signature of the first terminal device is not tampered with, determine that the user of the first terminal device is the trusted user, where the user public digital certificate of the first terminal device includes user identity credential public information of the first terminal device.

In a possible implementation, the trust parameter of the first terminal device includes a second parameter used to represent that the user of the first terminal device is the trusted user. When verifying, based on the trust parameter of the first terminal device, whether the user of the first terminal device is the trusted user, the processing module 901 is specifically configured to:
when the second parameter includes a user public digital certificate of the first terminal device, and the user public digital certificate of the first terminal device is valid, verify the user public digital certificate of the first terminal device, and when verification succeeds, determine that the user of the first terminal device is the trusted user; or
when the second parameter includes a user public digital certificate of the first terminal device and a trusted user signature of the first terminal device, determine that the user public digital certificate of the first terminal device is valid, and verify the user public digital certificate of the first terminal device; when verification succeeds, verify the trusted user signature of the first terminal device when verifying that user identity credential public information of the first terminal device included in the user public digital certificate of the first terminal device is valid; and when verifying that the trusted user signature of the first terminal device is not tampered with, determine that the user of the first terminal device is the trusted user, where the user public digital certificate of the first terminal device includes the user identity credential public information of the first terminal device.

In a possible implementation, the trusted user signature of the first terminal device is related to a user signature private key (K7). That the processing module 901 verifies that the trusted user signature of the first terminal device is not tampered with includes: the processing module 901 verifies the trusted user signature of the first terminal device by using a user signature public key (K8), and when verification succeeds, determines that the trusted user signature of the first terminal device is not tampered with, where the user signature private key and the user signature public key are a key pair.

For example, the trusted user signature of the first terminal device is obtained after one or more of the following are signed by using the user signature private key: a message digest of the communication message, firmware information of the first terminal device, the user identity credential public information of the first terminal device, or a signature timestamp.

In a possible implementation, after the processing module 901 verifies that the first terminal device is the trusted source, the transceiver module 902 sends communication content to the first terminal device, where the communication content is carried in a first protocol packet, the transceiver module 902 sends one second protocol packet carrying a trusted signature of the second terminal device each time a preset quantity of first protocol packets that carry the communication content are sent, and the trusted signature of the second terminal device includes a trusted user signature of the second terminal device and/or a trusted device signature of the second terminal device.

In a possible implementation, the trusted signature of the second terminal device is carried in an extension packet header of the second protocol packet, and a payload area of the second protocol packet carries the communication content; or the trusted signature of the second terminal device is carried in a payload area of the second protocol packet.

In still another possible application scenario, the apparatus 900 is applied to a second terminal device.

The transceiver module 902 is configured to receive a communication message from a first terminal device by using a trusted communication service platform to which the second terminal device belongs, where the communication message carries trusted endorsement signature information of the first terminal device; and
The processing module 901 is configured to determine, based on the trusted endorsement signature information, whether the communication message is trusted.

In a possible implementation, the trusted endorsement signature information is obtained after a trusted endorsement is signed by using a trusted endorsement private key of the trusted communication service platform to which the second terminal device belongs.

When determining, based on the trusted endorsement signature information, whether the communication response is trusted, the transceiver module 902 is specifically configured to: verify, by using a trusted endorsement public key, the trusted endorsement signature information, and when verification succeeds, and when determining that the trusted endorsement in the trusted endorsement signature information matches information included in the communication message, determine that the communication message is trusted, where the trusted endorsement public key and the trusted endorsement private key are a key pair.

For example, the trusted endorsement includes one or more of the following: digest information of the communication message, firmware information of the first terminal device, user identity credential public information of the first terminal device, an identifier of the trusted communication service platform to which the second terminal device belongs, a signature timestamp, a public key (K2) used to verify a trusted device digital certificate of the first terminal device, or a public key (K6) used to verify a trusted user digital certificate of the first terminal device.

FIG. 10 is a schematic diagram of a structure of an apparatus. The apparatus 1000 is applied to a trusted communication service platform. The apparatus 1000 may be configured to implement the method performed by the trusted communication service platform, the first trusted communication service platform, or the second trusted communication service platform in the foregoing method embodiments. For details, refer to the descriptions in the foregoing method embodiments. The apparatus 1000 includes a processing module 1001 and a transceiver module 1002.

For example, the apparatus is the first trusted communication service platform.

The transceiver module 1002 receives a first communication message from a first terminal device, where the first communication message carries a trust parameter of the first terminal device, and the trust parameter of the first terminal device is used to determine whether the first terminal device is a trusted source, and that the first terminal device is the trusted source includes that the first terminal device is a trusted device and/or a user of the first terminal device is a trusted user.

When determining, based on the trust parameter of the first terminal device, that the first terminal device is the trusted source, the processing module 1001 adds first trusted endorsement signature information of the first terminal device to the first communication message to obtain a second communication message. The first trusted communication service platform sends the second communication message to a second terminal device.

In a possible implementation, the first trusted endorsement signature information of the first terminal device is obtained after a first trusted endorsement is signed by using a trusted endorsement private key of the first trusted communication service platform, and the first trusted endorsement includes one or more of the following: digest information of the second communication message, firmware information of the first terminal device, user identity credential public information of the first terminal device, an identifier of the first trusted communication service platform, or a signature timestamp.

For example, the apparatus is the second trusted communication service platform.

The transceiver module 1002 receives a second communication message sent by a first trusted communication service platform, where the second communication message carries first trusted endorsement signature information, the first trusted endorsement signature information is added after the first trusted communication service platform verifies that a first terminal device is a trusted source, and the first terminal device belongs to the first trusted communication service platform.

When determining, based on the first trusted endorsement signature information, that the second communication message is trusted, the processing module 1001 replaces the first trusted endorsement signature information with second trusted endorsement signature information to obtain a third communication message, where the second trusted endorsement signature is used to verify whether the third communication message is trusted.

The transceiver module 1002 sends the third communication message to a second terminal device, where the second terminal device belongs to the second trusted communication service platform.

In a possible design, the first trusted endorsement signature information is obtained after a first trusted endorsement is signed by using a trusted endorsement private key of the first trusted communication service platform, and the first trusted endorsement includes one or more of the following: digest information of the second communication message, firmware information of the first terminal device, user identity credential public information of the first terminal device, an identifier of the first trusted communication service platform, a signature timestamp, a public key used to verify a trusted device digital certificate of the first terminal device, or a public key used to verify a trusted user digital certificate of the first terminal device.

In a possible design, the second trusted endorsement signature information is obtained after a second trusted endorsement is signed by using a trusted endorsement private key of the second trusted communication service platform, and the second trusted endorsement includes one or more of the following: digest information of the third communication message, firmware information of the first terminal device, user identity credential public information of the first terminal device, an identifier of the second trusted communication service platform, a signature timestamp, a public key used to verify a trusted device digital certificate of the first terminal device, or a public key used to verify a trusted user digital certificate of the first terminal device.

In a possible design, when determining, based on the first trusted endorsement signature information, that the second communication message is trusted, the processing module 1001 is specifically configured to: verify the first trusted endorsement signature information by using a trusted endorsement public key of the first trusted service platform, and when verification succeeds, if determining, based on the first trusted endorsement in the first trusted endorsement signature information, that the second communication message is not tampered with, determine that the second communication message is trusted.

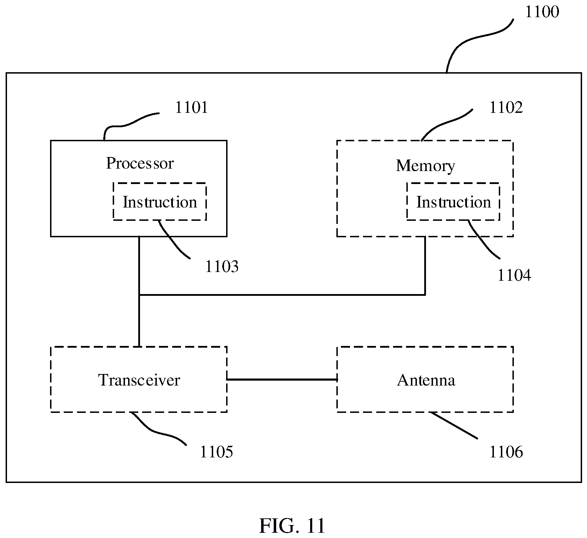

FIG. 11 is a schematic diagram of a structure of another apparatus. The apparatus 1100 may be a terminal device, or may be a chip, a chip system, a processor, or the like that supports the terminal device in implementing the foregoing methods. The apparatus may be configured to implement the method performed by the terminal device (including the first terminal device and the second terminal device) in the foregoing method embodiments. For details, refer to the descriptions in the foregoing method embodiments. The apparatus has a function of implementing the terminal device described in embodiments of this application. For example, the apparatus includes a corresponding module, unit, or means (means) used for the terminal device to perform the steps related to the terminal that are described in embodiments of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiments.

The apparatus 1100 may include one or more processors 1101. The processor 1101 may also be referred to as a processing unit, and may implement a control function. The processor 1101 may be a general-purpose processor, a special-purpose processor, or the like. For example, the processor may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a software program, and process data of the software program.

In an optional design, the processor 1101 may also store instructions and/or data 1103, and the instructions and/or data 1103 may be run on the processor, so that the apparatus 1100 performs the method described in the foregoing method embodiments.

In another optional design, the processor 1101 may include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code or data. Alternatively, the transceiver circuit, the interface, or the interface circuit may be configured to transmit or transfer a signal.

In still another possible design, the apparatus 1100 may include a circuit. The circuit may implement the sending, receiving, or communication function in the foregoing method embodiments.

Optionally, the apparatus 1100 may include one or more memories 1102. The memory stores instructions 1104, and the instructions may be run on the processor, so that the apparatus 1100 performs the method described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1100 may further include a transceiver 1105 and/or an antenna 1106. The processor 1101 may be referred to as a processing unit, and control the apparatus 1100. The transceiver 1105 may be referred to as a transceiver unit, a transceiver machine, a transceiver circuit, a transceiver apparatus, a transceiver module, or the like, and is configured to implement a transceiver function.

Optionally, the apparatus 1100 in this embodiment of this application may be configured to perform the method described in the foregoing embodiments of this application.

The processor and the transceiver in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may be manufactured by using various IC processing technologies, for example, a complementary metal oxide semiconductor (complementary metal oxide semiconductor, CMOS), an n-type metal oxide semiconductor (n-type Metal-oxide-semiconductor, NMOS), a p-channel metal oxide semiconductor (p-channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiment may be the terminal device. However, a range of the apparatus described in this application is not limited thereto, and a structure of the apparatus may not be limited to the structure in FIG. 11. The apparatus may be an independent device, or may be a part of a large device. For example, the apparatus may be:
(1) an independent integrated circuit IC, a chip, or a chip system or subsystem;
(2) a set with one or more ICs, where optionally, the IC set may also include a storage component configured to store data and/or instructions;
(3) an ASIC, for example, a modem (MSM);
(4) a module that can be embedded in another device;
(5) a receiver machine, a terminal, an intelligent terminal, a cellular phone, a wireless device, a handheld device, a mobile unit, a vehicle-mounted device, a network device, a cloud device, an artificial intelligence device, a machine device, a home device, a medical device, or an industrial device; or
(6) another device.

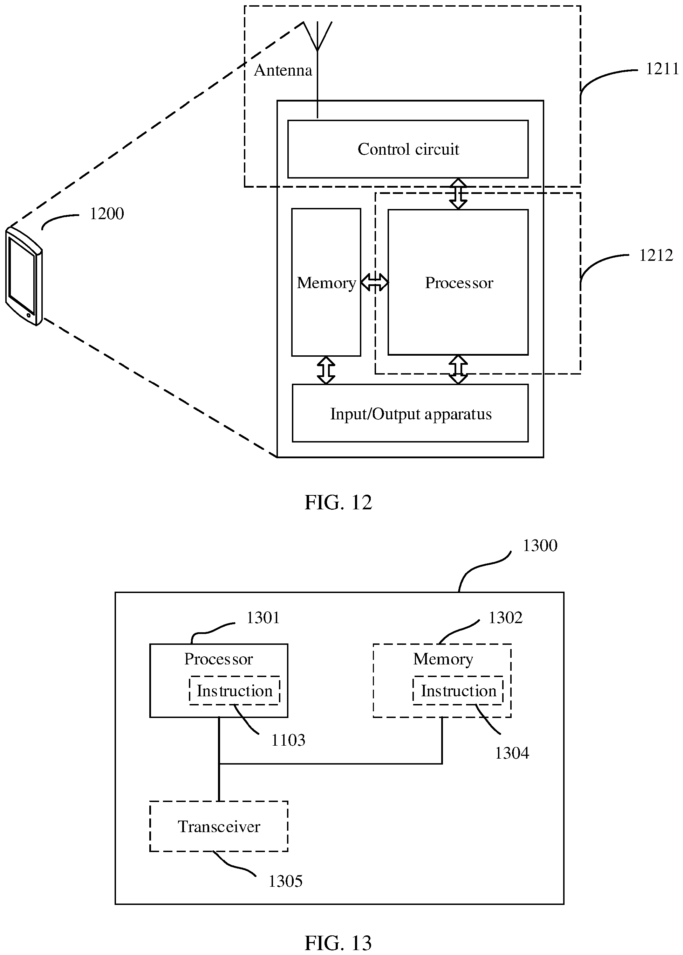

FIG. 12 is a schematic diagram of a structure of a terminal device. The terminal device is applicable to the scenario shown in FIG. 1. For ease of description, FIG. 12 shows only main components of the terminal device. As shown in FIG. 12, the terminal device 1200 includes a processor, a memory, a control circuit, an antenna, and an input/output apparatus. The processor is mainly configured to process a communication protocol and communication data, control the entire terminal, execute a software program, and process data of the software program. The memory is mainly configured to store a software program and data. The radio frequency circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, or a keyboard, is mainly configured to receive data entered by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal device, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 12 shows only one memory and one processor. In an actual terminal device, there may be a plurality of processors and a plurality of memories. The memory may also be referred to as a storage medium, a storage device, or the like. This is not limited in this embodiment of the present invention.

In an optional implementation, the processor may include a baseband processor and a central processing unit. The baseband processor is mainly configured to process a communication protocol and communication data. The central processing unit is mainly configured to control the entire terminal device, execute software program, and process data of the software program. Functions of the baseband processor and the central processing unit are integrated into the processor in FIG. 12. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be embedded in the processor, or may be stored in a storage unit in a form of the software program. The processor executes the software program to implement a baseband processing function.

In an example, an antenna and a control circuit that have a transceiver function may be considered as a transceiver unit 1211 of the terminal device 1200, and a processor that has a processing function may be considered as a processing unit 1212 of the terminal device 1200. As shown in FIG. 12, the terminal device 1200 includes the transceiver unit 1211 and the processing unit 1212. The transceiver unit may also be referred to as a transceiver, a transceiver machine, a transceiver apparatus, or the like. Optionally, a component that is in the transceiver unit 1211 and that is configured to implement a receiving function may be considered as a receiving unit, and a component that is in the transceiver unit 1211 and that is configured to implement a sending function may be considered as a sending unit. In other words, the transceiver unit 1211 includes the receiving unit and the sending unit. For example, the receiving unit may also be referred to as a receiver, a receiver machine, a receiver circuit, or the like, and the sending unit may be referred to as a transmitter, a transmitter machine, a transmitter circuit, or the like. Optionally, the receiving unit and the sending unit may be one integrated unit, or may be a plurality of independent units. The receiving unit and the sending unit may be in one geographical position, or may be distributed in a plurality of geographical positions.

FIG. 13 is a schematic diagram of a structure of another apparatus. The apparatus 1300 may be applied to a trusted communication service platform. The apparatus 1300 may be configured to implement the method performed by the trusted communication service platform, the first trusted communication service platform, or the second trusted communication service platform in the foregoing method embodiments. For details, refer to the descriptions in the foregoing method embodiments. The apparatus has a function of implementing the trusted communication service platform described in embodiments of this application. For example, the apparatus includes a corresponding module, unit, or means (means) used for the trusted communication service platform to perform the steps related to the trusted communication service platform that are described in embodiment of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiments.

The apparatus 1300 may include one or more processors 1301. The processor 1301 may also be referred to as a processing unit, and may implement a control function. The processor 1301 may be a general-purpose processor, a dedicated processor, or the like.

In an optional design, the processor 1301 may also store instructions and/or data 1303, and the instructions and/or data 1303 may be run on the processor, so that the apparatus 1300 performs the method described in the foregoing method embodiments.

In another optional design, the processor 1301 may include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code or data. Alternatively, the transceiver circuit, the interface, or the interface circuit may be configured to transmit or transfer a signal.

In still another possible design, the apparatus 1300 may include a circuit. The circuit may implement the sending, receiving, or communication function in the foregoing method embodiments.

Optionally, the apparatus 1300 may include one or more memories 1302. The memory stores instructions 1304, and the instructions may be run on the processor, so that the apparatus 1300 performs the method described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1300 may further include a transceiver 1305. The processor 1301 may be referred to as a processing unit, and control the apparatus 1300. The transceiver 1305 may be referred to as a transceiver unit, a transceiver machine, a transceiver circuit, a transceiver apparatus, a transceiver module, or the like, and is configured to implement a transceiver function.

Optionally, the apparatus 1300 in this embodiment of this application may be configured to perform the method performed by the trusted communication service platform described in embodiments of this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features according to requirements. Correspondingly, the apparatus provided in embodiments of this application may also correspondingly implement these features or functions. Details are not described herein.

A person skilled in the art may further understand that various illustrative logical blocks (illustrative logical blocks) and steps (steps) that are listed in embodiments of this application may be implemented by using electronic hardware, computer software, or a combination thereof. Whether the functions are implemented by using hardware or software depends on particular applications and a design requirement of an entire system. A person skilled in the art may use various methods to implement the functions for corresponding applications, but it should not be considered that the implementation goes beyond the protection scope of embodiments of this application.

It may be understood that, the processor in embodiments of this application may be an integrated circuit chip, and has a signal processing capability. In an implementation process, steps in the foregoing method embodiments are implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

The solutions described in this application may be implemented in various manners. For example, the technologies may be implemented by hardware, software, or a combination thereof. For hardware implementation, a processing unit configured to perform these technologies at a communication apparatus (for example, a base station, a terminal, a network entity, or a chip) may be implemented in one or more general-purpose processors, a DSP, a digital signal processing device, an ASIC, a programmable logic device, an FPGA or another programmable logic apparatus, a discrete gate or transistor logic, a discrete hardware component, or any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these and any memory of another appropriate type.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It may be understood that, in this application, "when" and "if" mean that an apparatus performs corresponding processing in an objective situation, but do not constitute a limitation on time, do not require that the apparatus have a determining action during implementation, and do not mean any other limitation.

"Simultaneously" in this application may be understood as being at a same time point, may be understood as being within a time period, or may be understood as being within a same periodicity.

A person skilled in the art may understand that first, second, and various reference numerals in this application are for distinguishing only for ease of description, and are not used to limit the scope of embodiments of this application. A specific value of a numeral (which may also be referred to as an index), a specific value of a quantity, and a position in this application are merely used as an example, but are not unique representation forms, and are not used to limit the scope of embodiments of this application. First, second, and various reference numerals in this application are also for distinguishing only for ease of description, and are not used to limit the scope of embodiments of this application.

In this application, unless otherwise specified, an element represented in a singular form is intended to represent "one or more", but is not intended to represent "one and only one". In this application, unless otherwise specified, "at least one" is intended to represent "one or more", and "a plurality of" is intended to represent "two or more".

In addition, the terms "system" and "network" are usually used interchangeably in this specification. The term "and/or" in this specification describes only an association relationship between associated objects and represents that three relationships may exist. For example, A and/or B may represent the following three cases: only A exists, both A and B exist, and only B exists. A may be singular or plural, and B may be singular or plural. The character "/" usually indicates an "or" relationship between associated objects.

The term "at least one of' in this specification indicates all or any combination of listed items. For example, "at least one of A, B, and C" may indicate the following six cases: A exists alone, B exists alone, C exists alone, A and B coexist, B and C coexist, and A, B, and C coexist. A may be singular or plural, B may be singular or plural, and C may be singular or plural.

It may be understood that in embodiments of this application, "B corresponding to A" indicates that B is associated with A, and B may be determined based on A. However, it should be understood that determining B based on A does not mean that B is determined based on only A. B may alternatively be determined based on A and/or other information.

"Predefine" in this application may be understood as "define", "predefine", "store", "pre-store", "pre-negotiate", "pre-configure", "solidify", or "pre-burn".

A person of ordinary skill in the art may understand that units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person of ordinary skill in the art may understand that, for a purpose of convenient and brief descriptions, for a detailed working process of the foregoing system, apparatus, and units, refer to a corresponding process in the foregoing method embodiments. Details are not described herein again.

It may be understood that the system, apparatus, and method described in this application may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one place, or may be distributed on a plurality of network units. Some or all of the units may be selected according to actual requirements to achieve the objectives of the solutions of embodiments.

In addition, function units in embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

For same or similar parts in embodiments of this application, refer to each other. In embodiments of this application and the implementations/implementation methods/implementation methods in embodiments, unless otherwise specified or a logical conflict occurs, terms and/or descriptions are consistent and may be mutually referenced between different embodiments and between the implementations/implementation methods/implementation methods in embodiments. Technical features in the various embodiments and the implementations/implementation methods/implementation methods in embodiments may be combined to form a new embodiment, implementation, implementation method, or implementation method according to an internal logical relationship thereof. The foregoing implementations of this application are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
determining, by a first terminal device, that the first terminal device is a trusted source; and
sending, by the first terminal device, a communication message to a second terminal device, wherein the communication message carries a trust parameter of the first terminal device, and the trust parameter of the first terminal device is used to indicate that the first terminal device is the trusted source; and
that the first terminal device is the trusted source comprises that the first terminal device is a trusted device and/or that a user of the first terminal device is a trusted user.

2. The method according to claim 1, wherein the trust parameter of the first terminal device comprises a first parameter used to represent that the first terminal device is the trusted device, and/or a second parameter used to represent that the user of the first terminal device is the trusted user; and
the first parameter comprises a trusted device digital certificate and/or a trusted device signature of the first terminal device, the second parameter comprises a user public digital certificate of the first terminal device and/or a trusted user signature of the first terminal device, and the user public digital certificate of the first terminal device comprises user identity credential public information of the first terminal device.

3. The method according to claim 2, wherein the trusted device signature is obtained after one or more of the following are signed by using a first secret key (K3) burnt in the first terminal device:
a message digest of the communication message, firmware information of the first terminal device, the user identity credential public information of the first terminal device, or a signature timestamp.

4. The method according to claim 2, wherein the trusted user signature of the first terminal device is obtained after one or more of the following are signed by using a user signature secret key:
a message digest of the communication message, firmware information of the first terminal device, the user identity credential public information of the first terminal device, or a signature timestamp.

5. The method according to any one of claims 1 to 4, wherein if that the first terminal device is the trusted source comprises that the user of the first terminal device is the trusted user, determining that the user of the first terminal device is the trusted user comprises:
verifying a user private digital certificate of the first terminal device, wherein the user private digital certificate comprises user identity credential privacy information of the first terminal device; and
when successfully verifying the user private digital certificate and determining that identity credential verification information comprised in the user identity credential privacy information of the first terminal device matches collected user verification information, determining that the user of the first terminal device is the trusted user.

6. The method according to any one of claims 1 to 5, wherein if that the first terminal device is the trusted source comprises that the first terminal device is the trusted device, determining that the first terminal device is the trusted device comprises:
determining, by the first terminal device, that a trusted chain of the first terminal device is not cracked.

7. A communication method, comprising:
receiving, by a second terminal device, a communication message from a first terminal device, wherein the communication message carries a trust parameter of the first terminal device, the trust parameter of the first terminal device is used to indicate whether the first terminal device is a trusted source, and that the first terminal device is the trusted source comprises that the first terminal device is a trusted device and/or that a user of the first terminal device is a trusted user; and
verifying, by the second terminal device based on the trust parameter of the first terminal device, whether the first terminal device is the trusted source.

8. The method according to claim 7, wherein the trust parameter of the first terminal device comprises a first parameter used to determine that the first terminal device is the trusted device; and
verifying, by the second terminal device based on the trust parameter of the first terminal device, whether the first terminal device is the trusted device comprises:
when the first parameter comprises a trusted device digital certificate of the first terminal device, verifying, by the second terminal device, the trusted device digital certificate of the first terminal device, and when verification succeeds, determining that the first terminal device is the trusted device; or
when the first parameter comprises a trusted device digital certificate of the first terminal device and a trusted device signature of the first terminal device, verifying, by the second terminal device, the trusted device digital certificate of the first terminal device; when verification succeeds, verifying the trusted device signature of the first terminal device; and when verifying that the trusted device signature of the first terminal device is not tampered with, determining that the first terminal device is the trusted device; or
when the first parameter comprises a trusted device signature of the first terminal device, determining, by the second terminal device when verifying that the trusted device signature of the first terminal device is not tampered with, that the first terminal device is the trusted device.

9. The method according to claim 7, wherein the trust parameter of the first terminal device comprises a first parameter used to verify that the first terminal device is the trusted device; and
verifying, by the second terminal device based on the trust parameter of the first terminal device, whether the first terminal device is the trusted device comprises:
when the first parameter comprises a trusted device digital certificate of the first terminal device, and the trusted device digital certificate of the first terminal device is valid, verifying, by the second terminal device, the trusted device digital certificate of the first terminal device, and when verification succeeds, determining that the first terminal device is the trusted device; or
when the first parameter comprises a trusted device digital certificate of the first terminal device and a trusted device signature of the first terminal device, determining, by the second terminal device, that the trusted device digital certificate of the first terminal device is valid, and verifying the trusted device digital certificate of the first terminal device; when verification succeeds, verifying the trusted device signature of the first terminal device when verifying that hardware information of the first terminal device comprised in the trusted device digital certificate of the first terminal device is valid; and when verifying that the trusted device signature of the first terminal device is not tampered with, determining that the first terminal device is the trusted device.

10. The method according to claim 8 or 9, wherein the trusted device signature of the first terminal device is related to a first secret key burnt in the first terminal device; and
the verifying that the trusted device signature of the first terminal device is not tampered with comprises:
verifying the trusted device signature of the first terminal device by using a second secret key, and when verification succeeds, determining that the trusted device signature of the first terminal device is not tampered with, wherein
the first secret key and the second secret key are a key pair.

11. The method according to claim 10, wherein the trusted device signature of the first terminal device is obtained after one or more of the following are signed by using the first secret key:
a message digest of the communication message, firmware information of the first terminal device, user public identity information of the first terminal device, or a signature timestamp.

12. The method according to any one of claims 7 to 11, wherein the trust parameter of the first terminal device comprises a second parameter used to verify that the user of the first terminal device is the trusted user; and
verifying, by the second terminal device based on the trust parameter of the first terminal device, whether the user of the first terminal device is the trusted user comprises:
when the second parameter comprises a user public digital certificate of the first terminal device, verifying, by the second terminal device, the user public digital certificate of the first terminal device, and when verification succeeds, determining that the user of the first terminal device is the trusted user; or
when the second parameter comprises a user public digital certificate of the first terminal device and a trusted user signature of the first terminal device, verifying, by the second terminal device, the user public digital certificate of the first terminal device; when verification succeeds, verifying the trusted user signature of the first terminal device; and when verifying that the trusted user signature of the first terminal device is not tampered with, determining that the user of the first terminal device is the trusted user, wherein
the user public digital certificate of the first terminal device comprises user identity credential public information of the first terminal device.

13. The method according to any one of claims 7 to 11, wherein the trust parameter of the first terminal device comprises a second parameter used to represent that the user of the first terminal device is the trusted user; and
verifying, by the second terminal device based on the trust parameter of the first terminal device, whether the user of the first terminal device is the trusted user comprises:
when the second parameter comprises a user public digital certificate of the first terminal device, and the user public digital certificate of the first terminal device is valid, verifying, by the second terminal device, the user public digital certificate of the first terminal device, and when verification succeeds, determining that the user of the first terminal device is the trusted user; or
when the second parameter comprises a user public digital certificate of the first terminal device and a trusted user signature of the first terminal device, determining, by the second terminal device, that the user public digital certificate of the first terminal device is valid, and verifying the user public digital certificate of the first terminal device; when verification succeeds, verifying the trusted user signature of the first terminal device when verifying that user identity credential public information of the first terminal device comprised in the user public digital certificate of the first terminal device is valid; and when verifying that the trusted user signature of the first terminal device is not tampered with, determining that the user of the first terminal device is the trusted user, wherein
the user public digital certificate of the first terminal device comprises the user identity credential public information of the first terminal device.

14. The method according to claim 13, wherein the trusted user signature of the first terminal device is related to a user signature private key; and
the verifying that the trusted user signature of the first terminal device is not tampered with comprises:
verifying the trusted user signature of the first terminal device by using a user signature public key, and when verification succeeds, determining that the trusted user signature of the first terminal device is not tampered with, wherein
the user signature private key and the user signature public key are a key pair.

15. The method according to claim 14, wherein the trusted user signature of the first terminal device is obtained after one or more of the following are signed by using the user signature private key:
a message digest of the communication message, firmware information of the first terminal device, the user identity credential public information of the first terminal device, or a signature timestamp.

16. The method according to any one of claims 7 to 15, further comprising:
sending, by the second terminal device, communication content to the first terminal device, wherein
the communication content is carried in a first protocol packet, one second protocol packet carrying a trusted signature of the second terminal device is sent each time a preset quantity of first protocol packets that carry the communication content are sent, and the trusted signature of the second terminal device comprises a trusted user signature of the second terminal device and/or a trusted device signature of the second terminal device.

17. The method according to claim 16, wherein the trusted signature of the second terminal device is carried in an extension packet header of the second protocol packet, and a payload area of the second protocol packet carries the communication content; or
the trusted signature of the second terminal device is carried in a payload area of the second protocol packet.

18. A communication method, wherein the method comprises:
receiving, by a second terminal device, a communication message from a first terminal device by using a trusted communication service platform to which the second terminal device belongs, wherein the communication message carries trusted endorsement signature information added when the trusted communication service platform verifies that the first terminal device is a trusted source; and
determining, by the second terminal device based on the trusted endorsement signature information, whether the communication message is trusted.

19. The method according to claim 16, wherein the trusted endorsement signature information is obtained after a trusted endorsement is signed by using a trusted endorsement private key of the trusted communication service platform to which the second terminal device belongs; and
the determining, by the second terminal device based on the trusted endorsement signature information, whether the communication message is trusted comprises:
verifying, by the second terminal device by using a trusted endorsement public key, the trusted endorsement signature information, and when verification succeeds, determining, when determining that the trusted endorsement in the trusted endorsement signature information matches information comprised in the communication message, that the communication message is trusted, wherein
the trusted endorsement public key and the trusted endorsement private key are a key pair.

20. The method according to claim 18 or 19, wherein the trusted endorsement comprises one or more of the following:
digest information of the communication message, firmware information of the first terminal device, user identity credential public information of the first terminal device, an identifier of the trusted communication service platform to which the second terminal device belongs, a signature timestamp, a public key used to verify a trusted device digital certificate of the first terminal device, or a public key used to verify a trusted user digital certificate of the first terminal device.

21. A communication method, comprising:
receiving, by a first trusted communication service platform, a first communication message from a first terminal device, wherein the first communication message carries a trust parameter of the first terminal device, the trust parameter of the first terminal device is used to determine whether the first terminal device is a trusted source, and that the first terminal device is the trusted source comprises that the first terminal device is a trusted device and/or a user of the first terminal device is a trusted user;
when determining, based on the trust parameter of the first terminal device, that the first terminal device is the trusted source, adding, by the first trusted communication service platform, first trusted endorsement signature information to the first communication request to obtain a second communication message, wherein the first trusted endorsement signature information is used to indicate that the second communication message is a trusted message; and
sending, by the first trusted communication service platform, the second communication message to a second terminal device.

22. The method according to claim 21, wherein the first trusted endorsement signature information of the first terminal device is obtained after a first trusted endorsement is signed by using a trusted endorsement private key of the first trusted communication service platform, and the first trusted endorsement comprises one or more of the following:
digest information of the second communication request, firmware information of the first terminal device, user identity credential public information of the first terminal device, an identifier of the first trusted communication service platform, a signature timestamp, a public key used to verify a trusted device digital certificate of the first terminal device, or a public key used to verify a trusted user digital certificate of the first terminal device.

23. A communication method, comprising:
receiving, by a second trusted communication service platform, a second communication message sent by a first trusted communication service platform, wherein the second communication message carries first trusted endorsement signature information, the first trusted endorsement signature information is added after the first trusted communication service platform verifies that a first terminal device is a trusted source, and the first terminal device belongs to the first trusted communication service platform;
when determining, based on the first trusted endorsement signature information, that the second communication message is trusted, replacing, by the second trusted communication service platform, the first trusted endorsement signature information with second trusted endorsement signature information to obtain a third communication message, wherein the second trusted endorsement signature is used to verify whether the third communication message is trusted; and
sending, by the second trusted communication service platform, the third communication message to a second terminal device, wherein the second terminal device belongs to the second trusted communication service platform.

24. The method according to claim 23, wherein the first trusted endorsement signature information is obtained after a first trusted endorsement is signed by using a trusted endorsement private key of the first trusted communication service platform, and the first trusted endorsement comprises one or more of the following:
digest information of the second communication message, firmware information of the first terminal device, user identity credential public information of the first terminal device, an identifier of the first trusted communication service platform, a signature timestamp, a public key used to verify a trusted device digital certificate of the first terminal device, or a public key used to verify a trusted user digital certificate of the first terminal device.

25. The method according to claim 23, wherein the second trusted endorsement signature information is obtained after a second trusted endorsement is signed by using a trusted endorsement private key of the second trusted communication service platform, and the second trusted endorsement comprises one or more of the following:
digest information of the third communication message, firmware information of the first terminal device, user identity credential public information of the first terminal device, an identifier of the second trusted communication service platform, a signature timestamp, a public key used to verify a trusted device digital certificate of the first terminal device, or a public key used to verify a trusted user digital certificate of the first terminal device.

26. The method according to any one of claims 23 to 25, wherein the determining, by the second trusted communication service platform based on the first trusted endorsement signature information, that the second communication message is trusted comprises:
verifying, by the second trusted communication service platform, the first trusted endorsement signature information by using a trusted endorsement public key of the first trusted service platform, and when verification succeeds, if determining, based on the first trusted endorsement in the first trusted endorsement signature information, that the second communication message is not tampered with, determining that the second communication message is trusted.

27. A communication apparatus, comprising a processor and a communications interface, wherein
the communications interface is configured to receive and send communication messages; and
the processor is configured to receive and send communication messages through the communications interface, and implement the method according to any one of claims 1 to 6, 7 to 17, or 18 to 20.

28. A communication apparatus, comprising a processor and a communications interface, wherein
the communications interface is configured to receive and send communication messages; and
the processor is configured to receive and send communication messages through the communications interface, and implement the method according to any one of claims 21 to 26.

29. A computer-readable storage medium, wherein the storage medium stores computer instructions, and when the computer instructions are executed, the method according to any one of claims 1 to 6, 7 to 17, 18 to 20, 21 and 22, or 23 to 26 is performed.
